# EUROPEAN PATENT APPLICATION

(11) **EP 2 629 363 A1**
(43) Date of publication of application: **21.08.2013**
(21) Application number: 11840836.8
(22) Date of filing: 18.11.2011
(51) Int. Cl.: H01Q 1/32, H01B 7/00, H01Q 1/44, H01Q 7/00, H01Q 9/26

(54) **ANTENNA INTEGRATED HARNESS**

(30) Priority: 19.11.2010 JP 2010259589
(71) Applicant: Fujikura, Ltd., Tokyo 135-8512 (JP)
(72) Inventor: NITTA, Hiroki, Sakura-shi, Chiba 285-8550 (JP); GUAN, Ning, Sakura-shi, Chiba 285-8550 (JP); TOGURA, Takeshi, Sakura-shi, Chiba 285-8550 (JP); YAMAGUCHI, Yuichiro, Sakura-shi, Chiba 285-8550 (JP); NOGUCHI, Yuki, Koto-ku, Tokyo 1358512 (JP)
(74) Representative: Cabinet Plasseraud
(86) International application number: PCT/JP2011/076716
(87) International publication number: WO 2012/067244

(57) **Abstract**

An antenna integrated harness (1a) in accordance with an embodiment of the present invention includes: a wire harness (10) formed by bundling a plurality of electric cables (11); an antenna element (215) which is two-dimensional planar and is provided on, while conforming to, a surface of the wire harness (10); and a feed line (221) connected with the antenna element (215) and bundled with the plurality of electric cables (11).

## Description

### Technical Field

The present invention mainly relates to an antenna integrated harness which is mounted on a movable body such as an automobile and is suitable for a wireless device.

### Background Art

For example, in the field of an in-car antenna to be mounted on an automobile, recent advance in a communication network has caused development of various antennas which are suitable for various frequency bands to be used.

For example, car navigation systems are connected with various kinds of antennas which are suitable for transmission and reception of microwaves of 1 GHz to 10 GHz and are used in ITS (Intelligent Transport Systems) such as GPS (Global Positioning System), VICS (Vehicle Information and Communication System: Registered Trademark), and ETC (Electronic Toll Collection).

Further, a car navigation system is generally provided with not only the ITS but also a tuner which receives radio broadcasting and terrestrial digital broadcasting. Accordingly, a band in which an antenna device for a car navigation system is required to operate includes an AM frequency of 526.5 kHz to 1606.5 kHz, a band of 60 MHz, a VHF frequency of 87.5 MHz to 108 MHz, a UHF frequency of 470 MHz to 770 MHz to be used for terrestrial digital broadcasting. Thus, the band covers a wide range.

The terrestrial digital broadcasting makes it possible to provide not only a digital high-definition and high sound quality program but also an interactive program, so that a program in which images are clear without flickering can be viewed even with a television installed in, for example, a running train or bus. Further, it is scheduled to provide a service that allows a mobile information terminal or the like to receive and view a moving image, data broadcasting, or voice broadcasting.

As an antenna for use in a television receiver or a radio receiver for a small portable device, there has been widely known a rod antenna having an extendable structure. The rod antenna is useful, because it can exert its functions when extended and it becomes compact when retracted. As an antenna device using the rod antenna, for example, there has been proposed a device in which (i) a feed pin of a planar antenna is constituted by an extendable rod antenna and (ii) electric connection and disconnection between an extraction conductor of the rod antenna and a patch-shaped conductor of the planar antenna enable the antenna device to serve as a circularly polarized wave antenna and a linearly polarized wave antenna.

Further, there has been known a "helical (coil) antenna" as another arrangement example of the rod antenna. The helical antenna is formed by spirally winding an antenna line around a rod. Generally, an antenna using a conducting wire longer than a wavelength has a wide useable band. Therefore, the helical (coil) antenna can be downsized while keeping its wide-band characteristic by virtue of its winding structure.

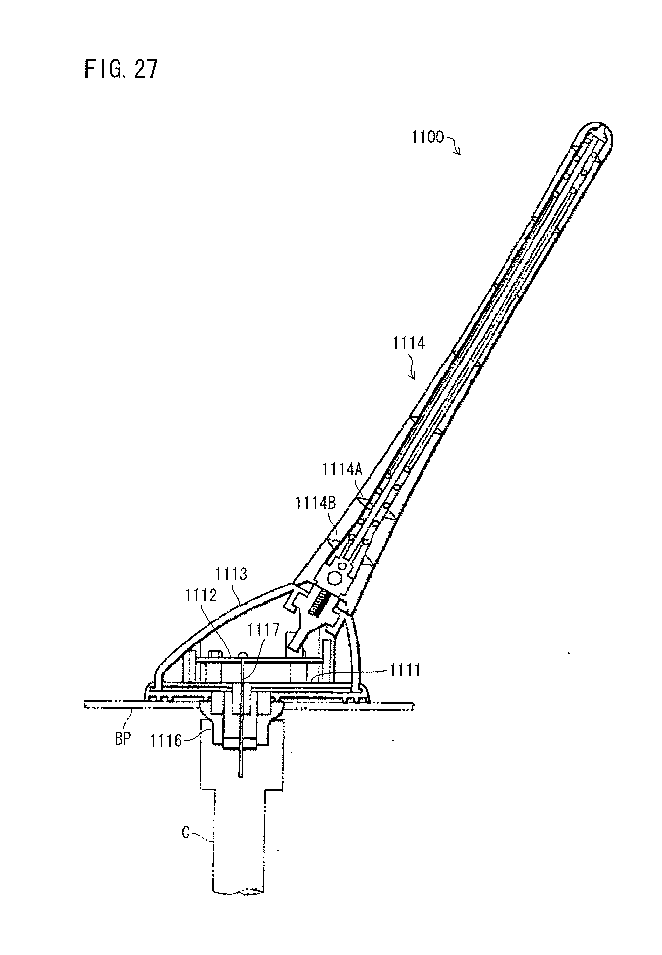

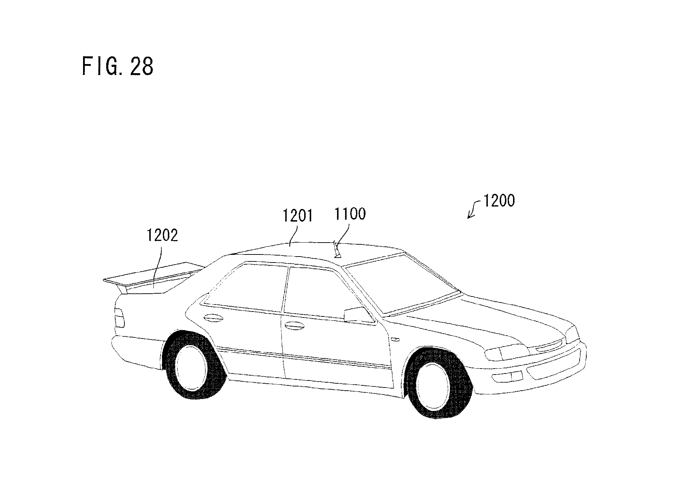

Fig. 27 is a cross-sectional view of a helical coil antenna disclosed in Patent Literature 1. A helical coil antenna 1100 of Patent Literature 1 is, for example, an auto antenna which can be provided on a roof 1201 or a trunk 1202 of an automobile 1200 (see Fig. 28). The helical coil antenna 1100 transmits/receives a radio wave to/from a car navigation system or a dedicated portable television mounted on the automobile.

According to the helical coil antenna 1100 shown in Fig. 27, an electrical substrate 1112 constituting a circuit board which is provided on a base plate 1111 made of metal is contained in a base casing 1113 fixed on a body panel BP. The base plate 1111 is provided with a BNC connector 1116 to which a feed cord C is connected from outside the base plate 1111. A part of the electrical substrate 1112 which part faces the connector 1116 is provided with a connection terminal 1117 that is needle-shaped. The connection terminal 1117, which has a top end that is fixed to the electrical substrate 1112 in advance, is connected to each of electronic circuits such as an amplifier circuit and a matching circuit which are provided on the electrical substrate 1112. The connection terminal 1117 is provided so as to extend in a downward direction toward the BNC connector 1116. Further, the helical coil antenna 1100 is provided with an antenna element 1114 whose base end is supported by the base casing 1113. The antenna element 1114 is constituted by a helical coil 1114A and an antenna casing 1114B which covers the helical coil 1114A. Note that each of the BNC connector 1116 and the antenna element 1114 is electrically connected to the circuit board of the electrical substrate 1112.

### Citation List

Japanese Patent Application Publication, Tokukai, No. 2000-295017 (Publication Date: October 20, 2000)

### Summary of Invention

### Technical Problem

The helical coil antenna 1100 of Fig. 27 (described earlier) is provided by a complicated process, e.g., the helical coil antenna 1100 needs to be provided by a process including the step of fitting the helical coil antenna 1100 to the body panel BP via a through hole which is provided to the body panel BP for a connection between an outside and an inside of the automobile. Further, there is also a problem such that the helical antenna itself, which is complicated in antenna structure and has a protruding structure, needs to be provided in a large space.

Note here that it is essential for a wireless device such as a mobile phone, a car navigation system, a dedicated portable television, or a personal computer to be provided with an antenna. However, an antenna having a conventional arrangement varies in performance (directivity, usable band) depending on a place where the antenna is provided. In particular, the antenna deteriorates in performance due to the presence of a conductor (including a wireless device, for example) near the antenna. Therefore, an antenna having a conventional arrangement frequently needs to be provided in a place away from a wireless device. Such a case requires a complicated wiring process for connecting the antenna and the wireless device.

In particular, in the case of an in-car antenna (described earlier), many electronic devices and a harness formed by causing a group of wires extending from the respective electronic devices to be a bundle are provided in a narrow space inside a car body, and it is necessary to further provide an antenna line in the narrow space.

The present invention has been made in view of the problems, and an object of the present invention is to provide an antenna integrated harness which serves as an antenna device and can be easily provided even in a narrow space in a vicinity of a conductor such as a wireless device.

### Solution to Problem

In order to attain the object, a first antenna integrated harness in accordance with the present invention includes: a wire harness formed by bundling a plurality of electric cables; an antenna element which is plate-like and is provided on, while conforming to, a surface of the wire harness; and a feed line connected with the antenna element and bundled with the plurality of electric cables.

In order to attain the object, a second antenna integrated harness in accordance with the present invention includes: a wire harness formed by bundling a plurality of electric cables; a member which can be connected with the wire harness; an antenna element which is plate-like and is provided on, while conforming to, a surface of the member; and a feed line which is connected with the antenna element and which can be bundled with the plurality of electric cables when the member is connected with the wire harness.

Note that "an antenna element which is plate-like and is provided on, while conforming to, a surface of a wire harness" encompasses not only (1) a state in which the antenna element is provided on the surface of the wire harness but also all the following states (described later): (2) a state in which the antenna element is not in direct contact with the surface of the wire harness, i.e., a state in which the antenna element is provided on an outer surface of a dielectric material which is provided on the surface of the wire harness, (3) a state in which the antenna element is provided on an inner surface of a dielectric material provided on, while conforming to, the surface of the wire harness, and (4) a state in which the antenna element is embedded in a dielectric material provided on, while conforming to, the surface of the wire harness.

Note that a "plate-like" plane is not limited to a two-dimensional plane but may be a plane which (i) is obtained by cutting off a part of a curved surface such as a cylindrical surface, a spherical surface, a paraboloid, or a hyperboloid and (ii) has a three-dimensional shape.

Note also that a movable body on which an antenna integrated harness mentioned above is mounted is also included within the scope of the present invention.

### Advantageous Effects of Invention

An antenna integrated harness of the present invention having the configuration can be easily provided in a vicinity of a conductor such as a wireless device. Further, the antenna integrated harness yields an effect such that (i) an antenna which is used as, for example, an in-car antenna or an antenna for another small device needs to occupy only a small space and (ii) an antenna element can be provided in a narrow space even if the narrow space is in a vicinity of a conductor.

### Brief Description of Drawings

Fig. 1

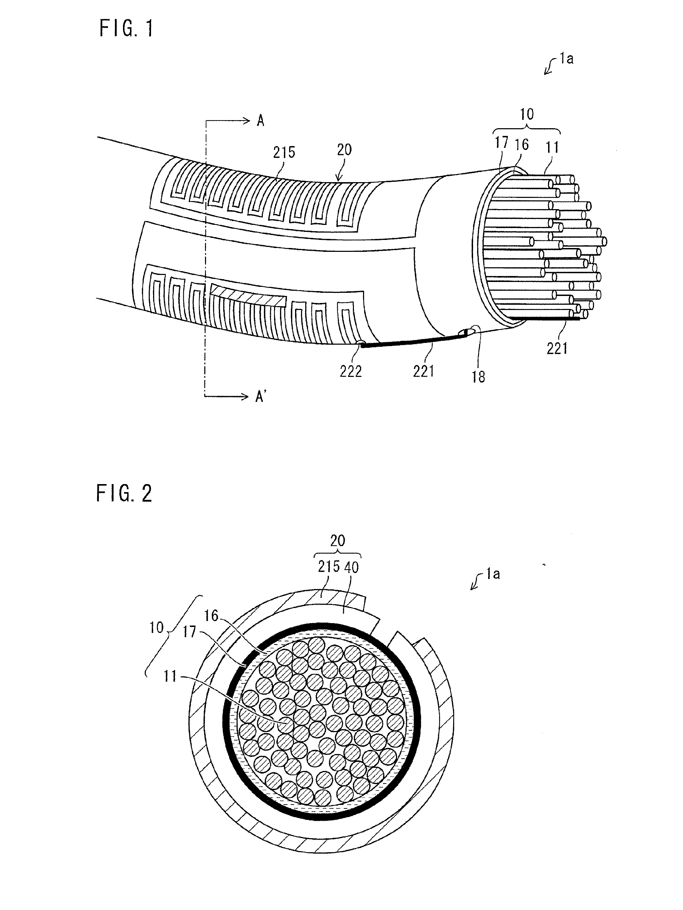

   Fig. 1 is a perspective view illustrating a configuration of an antenna integrated harness of an embodiment of the present invention.
Fig. 2
   Fig. 2 is a cross-sectional view taken from arrows A-A' of the antenna integrated harness shown in Fig. 1.
Fig. 3

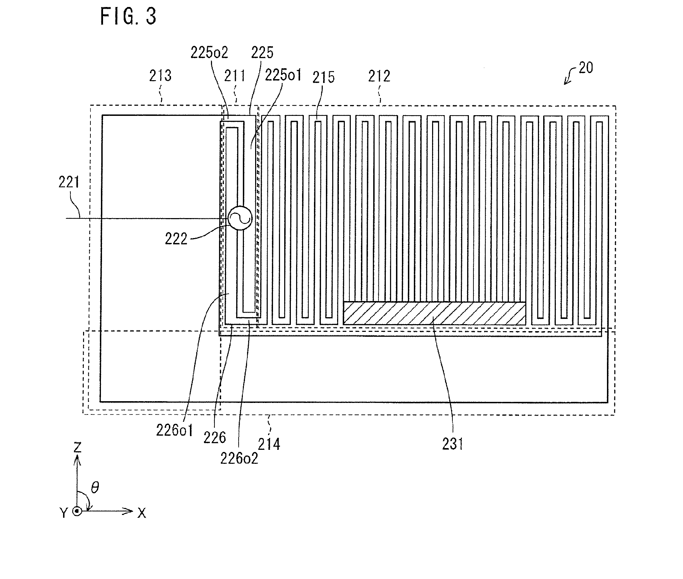

   Fig. 3 is a plan view illustrating a structure of an antenna element of an antenna included in the antenna integrated harness shown in Fig. 1.
Fig. 4

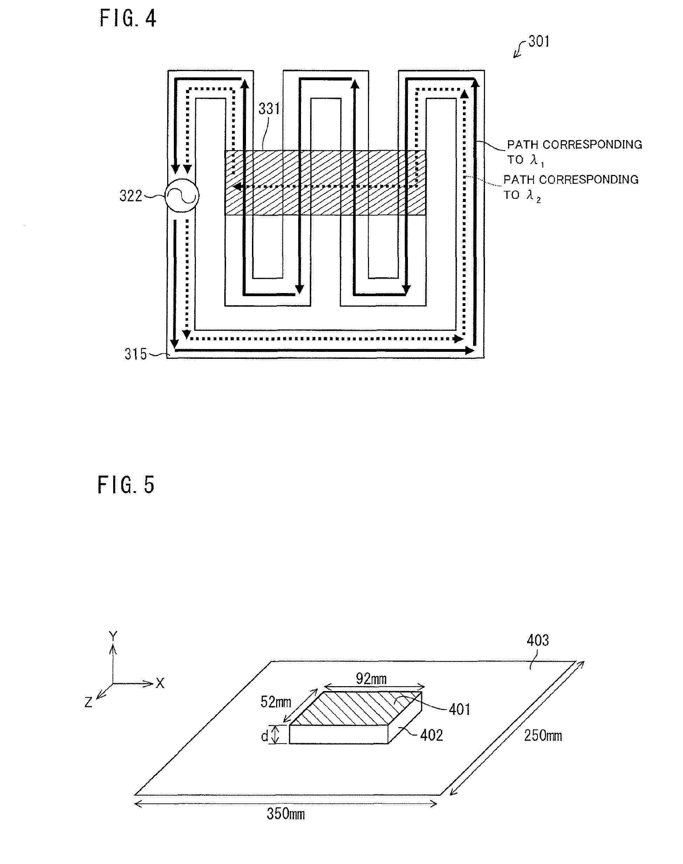

   Fig. 4 is a view schematically illustrating how a short-circuit member is provided in an antenna element having a meander shape so as to form a plurality of electrically conductive paths in the antenna element.
Fig. 5
   Fig. 5 is a view schematically describing how measurements are carried out in experiments for showing the effects of an antenna of an antenna integrated harness of the present invention.
Fig. 6

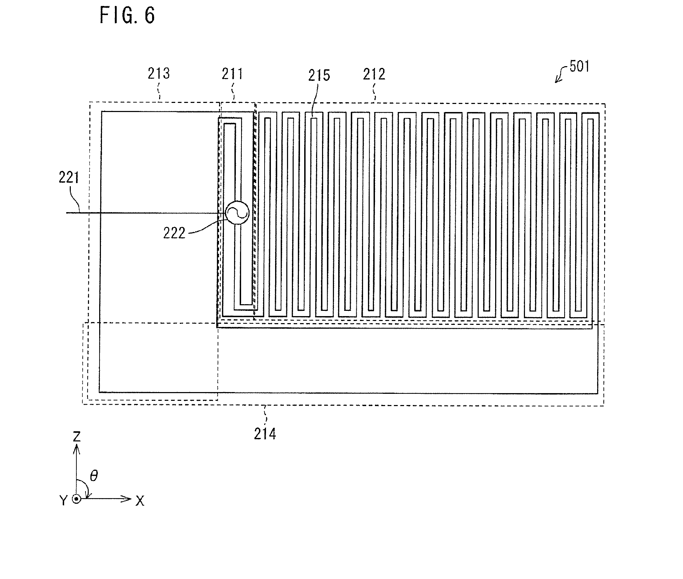

   Fig. 6 is a plan view schematically illustrating a configuration of another example of the antenna shown in Fig. 3.
Fig. 7

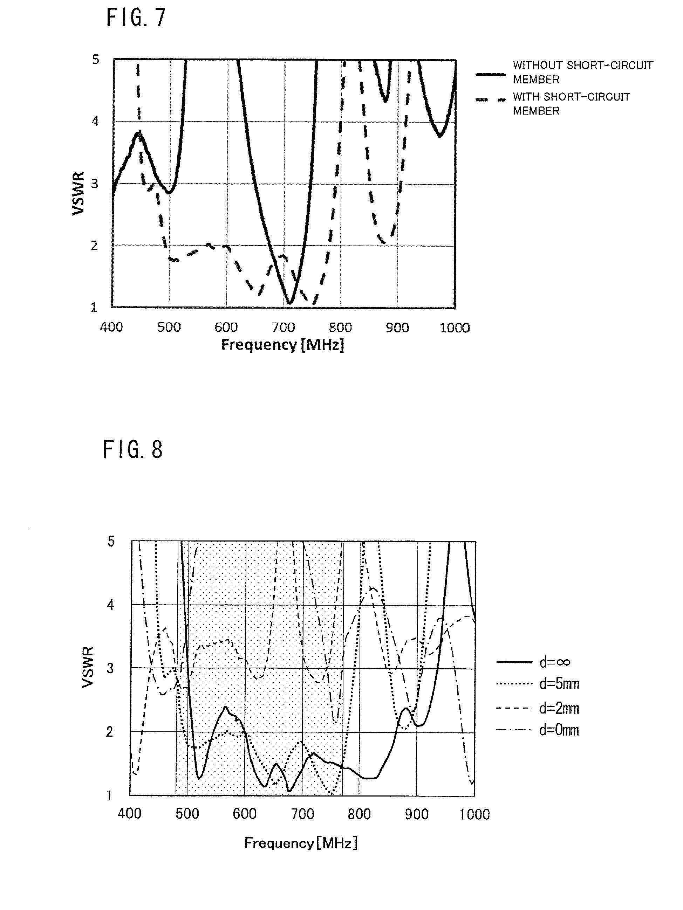

   Fig. 7 is a graph illustrating VSWR characteristics of the antenna shown in Fig. 3 and of the antenna shown in Fig. 6.
Fig. 8
   Fig. 8 is a graph illustrating VSWR characteristics of the antenna shown in Fig. 3, which VSWR characteristics were measured while the thickness of a dielectric material was being changed.
Fig. 9

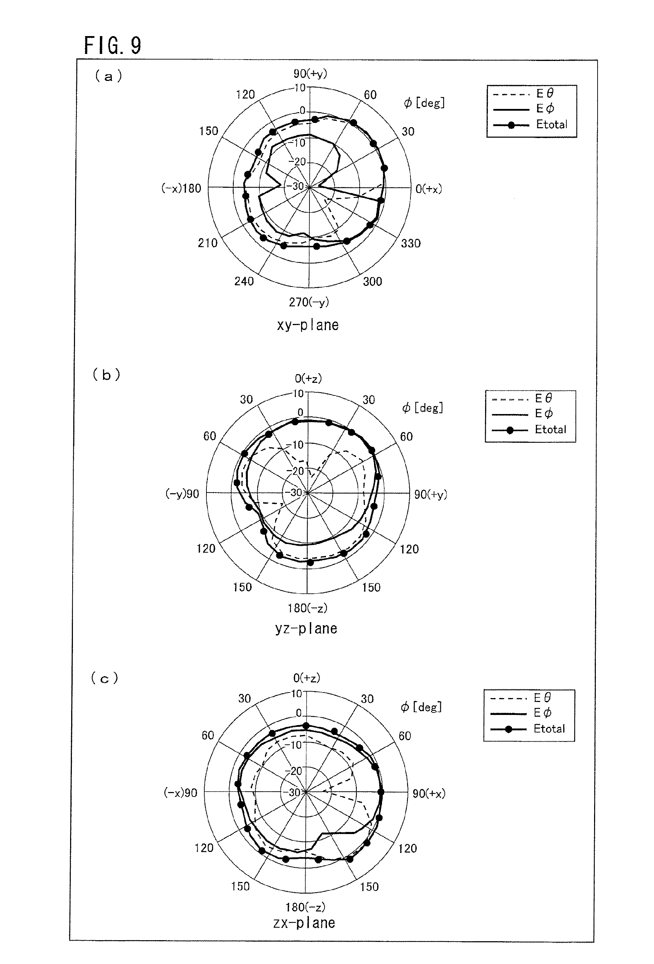

   Fig. 9 shows graphs illustrating radiation patterns of the antenna shown in Fig. 3. (a) of Fig. 9 illustrates an in-xy-plane radiation pattern. (b) of Fig. 9 illustrates an in-yz-plane radiation pattern. (c) of Fig. 9 illustrates an in-zx-plane radiation pattern.
Fig. 10

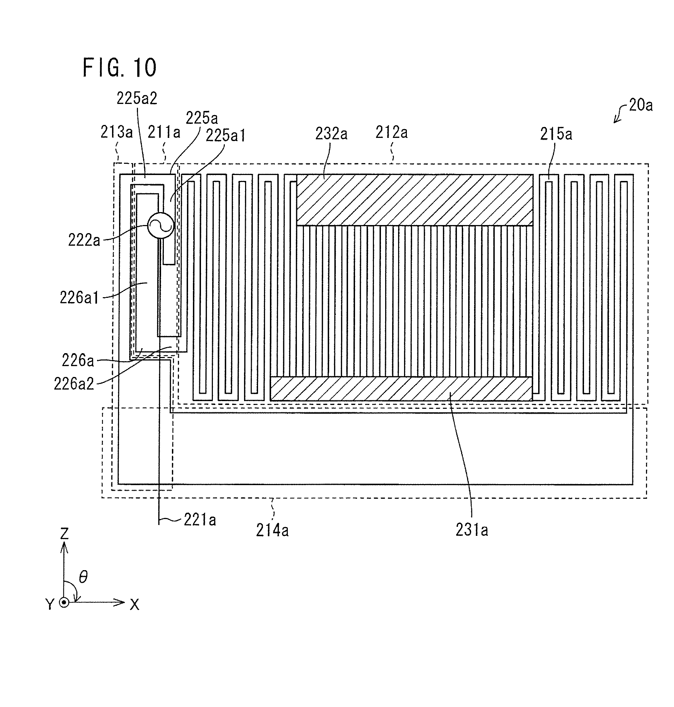

   Fig. 10 is a plan view schematically illustrating a configuration of another example of the antenna shown in Fig. 3.
Fig. 11

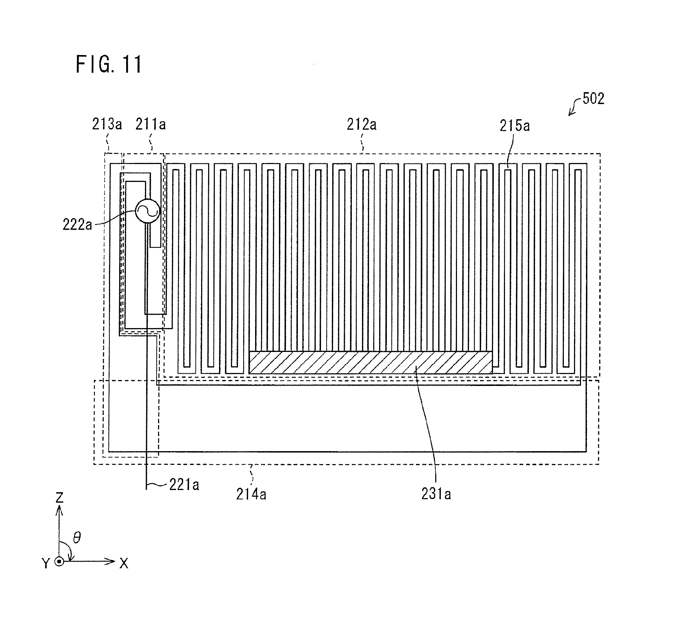

   Fig. 11 is a plan view schematically illustrating a configuration of another example of the antenna shown in Fig. 3.
Fig. 12

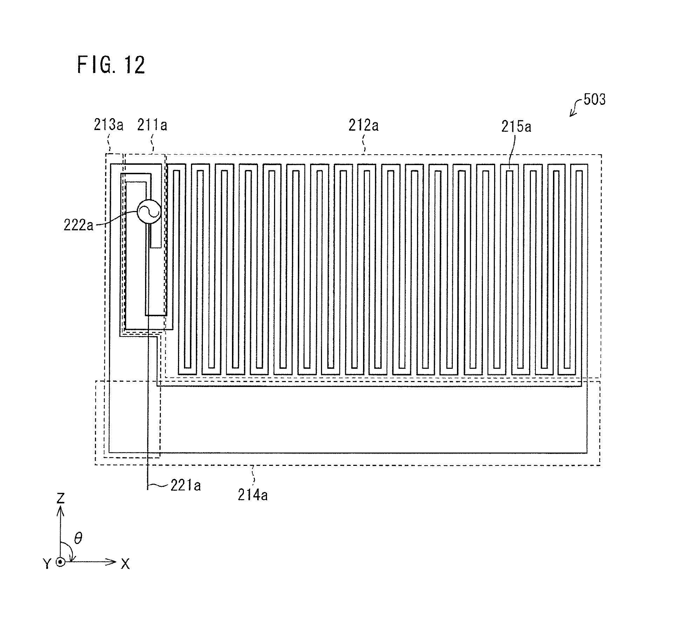

   Fig. 12 is a plan view schematically illustrating a configuration of another example of the antenna shown in Fig. 3.
Fig. 13

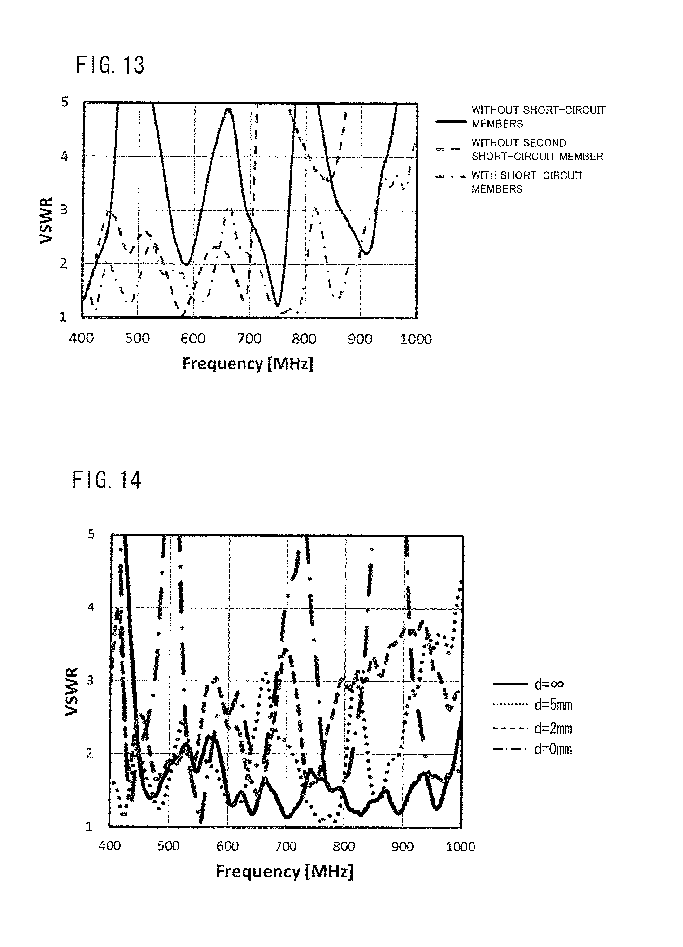

   Fig. 13 is a graph illustrating VSWR characteristics of the antenna shown in Fig. 10, of the antenna shown in Fig. 11, and of the antenna shown in Fig. 12.
Fig. 14
   Fig. 14 is a graph illustrating VSWR characteristics of the antenna shown in Fig. 10, which VSWR characteristics were measured while the thickness of a dielectric material was being changed.
Fig. 15

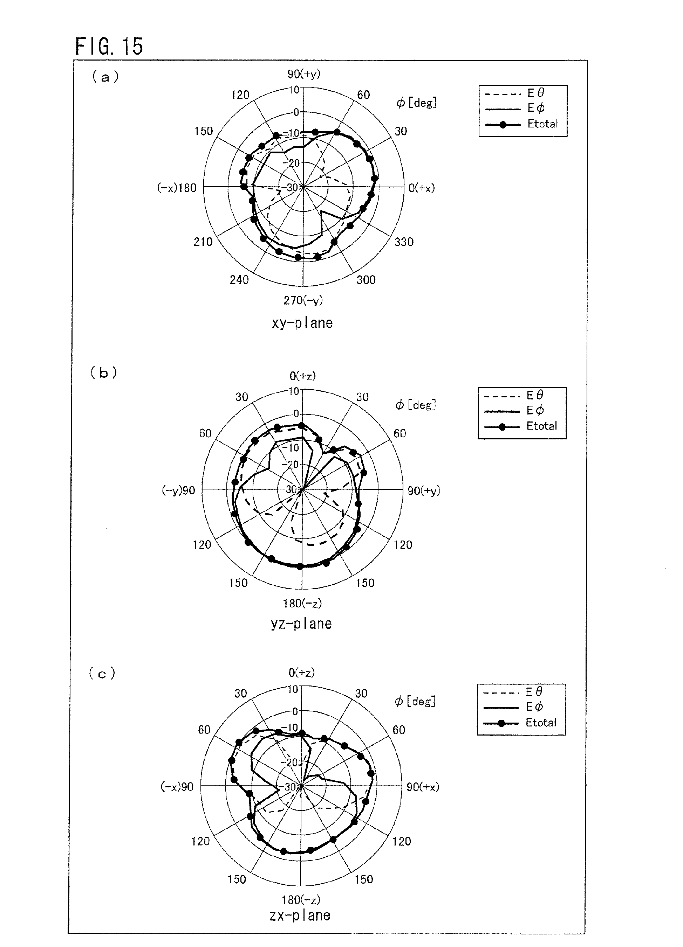

   Fig. 15 shows graphs illustrating radiation patterns of the antenna integrated harness shown in Fig. 10. (a) of Fig. 15 illustrates an in-xy-plane radiation pattern. (b) of Fig. 15 illustrates an in-yz-plane radiation pattern. (c) of Fig. 15 illustrates an in-zx-plane radiation pattern.
Fig. 16

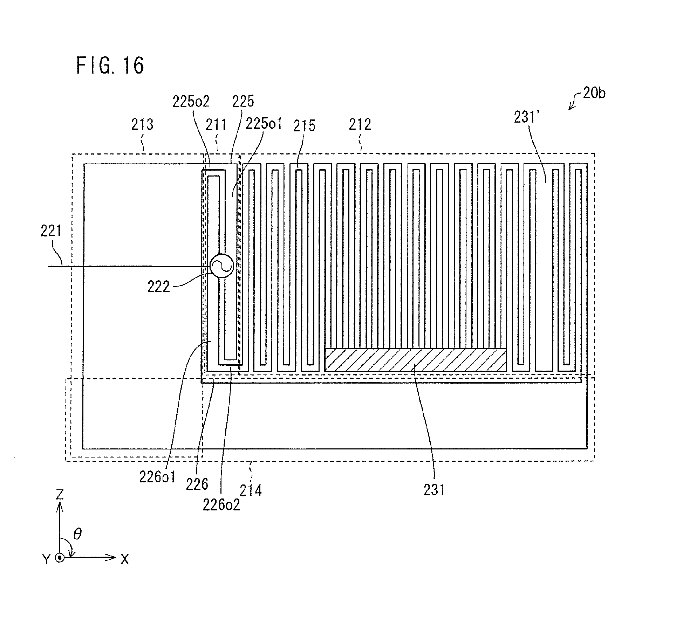

   Fig. 16 is a plan view schematically illustrating a configuration of another example of the antenna shown in Fig. 3.
Fig. 17

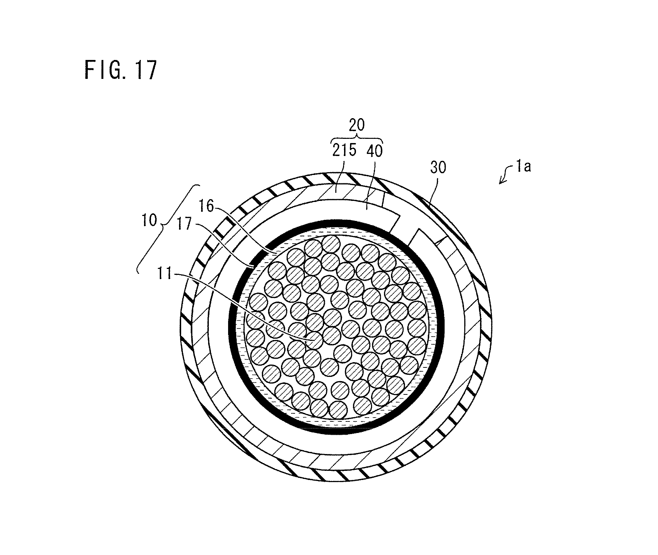

   Fig. 17 is a cross-sectional view illustrating another example of the antenna integrated harness shown in Fig. 2.
Fig. 18

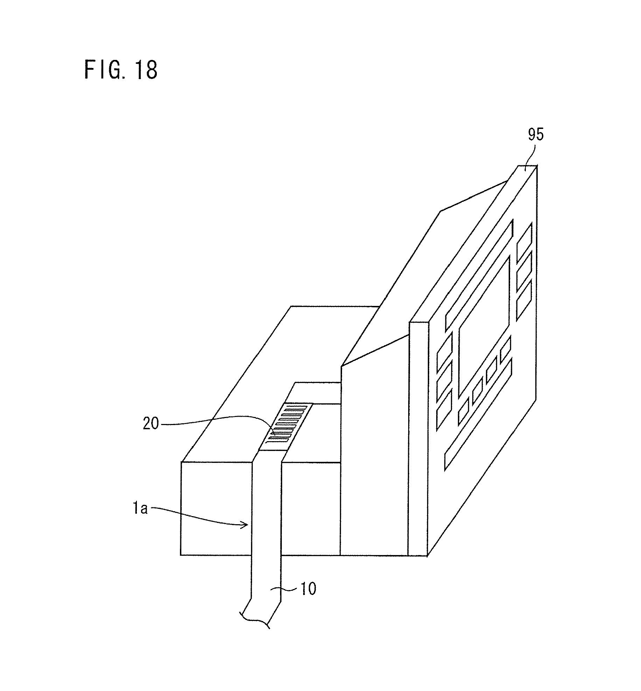

   Fig. 18 is a perspective view illustrating a state in which the antenna integrated harness shown in Fig. 1 is connected with a wireless device.
Fig. 19

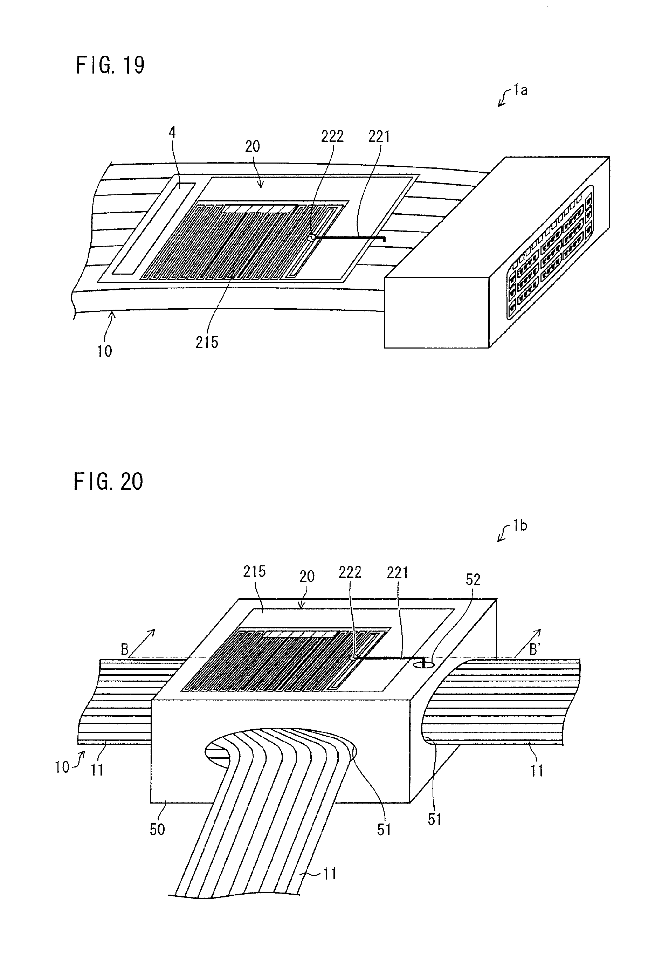

   Fig. 19 is a perspective view illustrating a configuration of an antenna integrated harness of another embodiment of the present invention.
Fig. 20
   Fig. 20 is a perspective view illustrating a configuration of an antenna integrated harness of another embodiment of the present invention.
Fig. 21

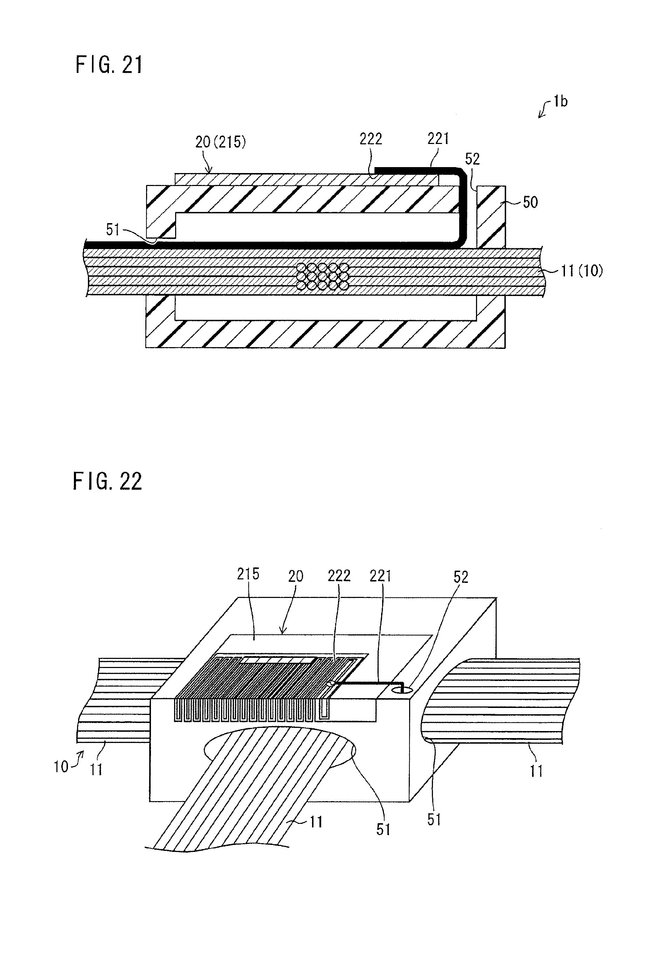

   Fig. 21 is a cross-sectional view taken from arrows B-B' of the antenna integrated harness shown in Fig. 20.
Fig. 22
   Fig. 22 is a perspective view illustrating another example of the antenna integrated harness shown in Fig. 20.
Fig. 23

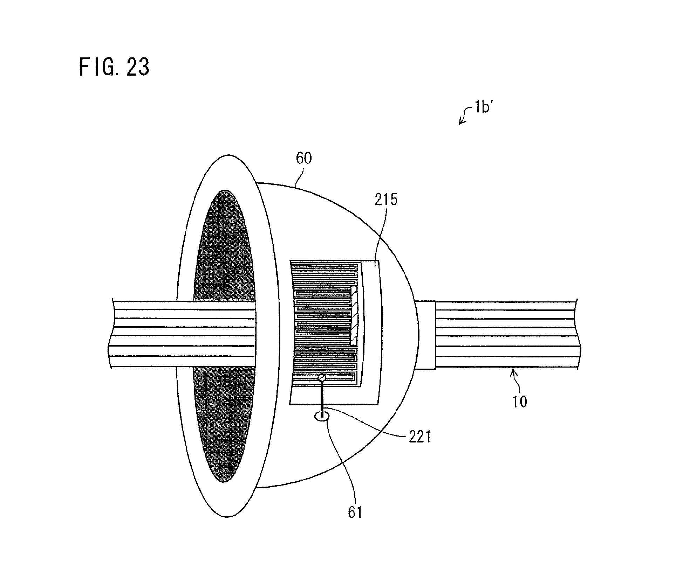

   Fig. 23 is a perspective view illustrating a configuration of an antenna integrated harness of another embodiment of the present invention.
Fig. 24

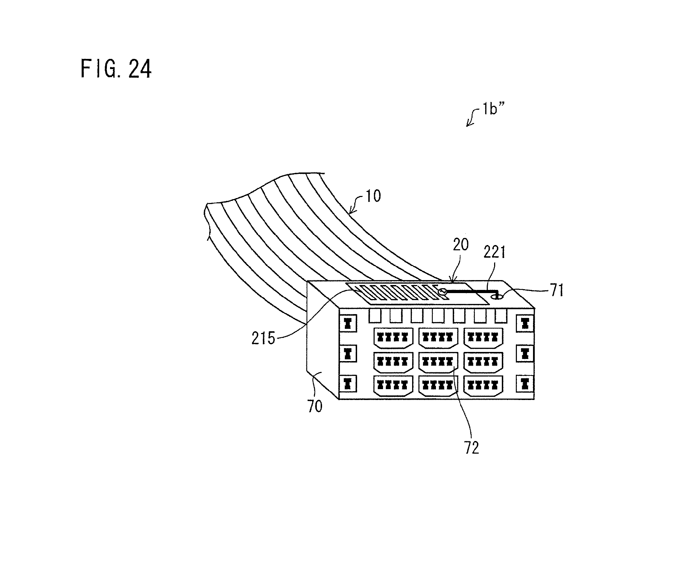

   Fig. 24 is a perspective view illustrating a configuration of an antenna integrated harness of another embodiment of the present invention.
Fig. 25

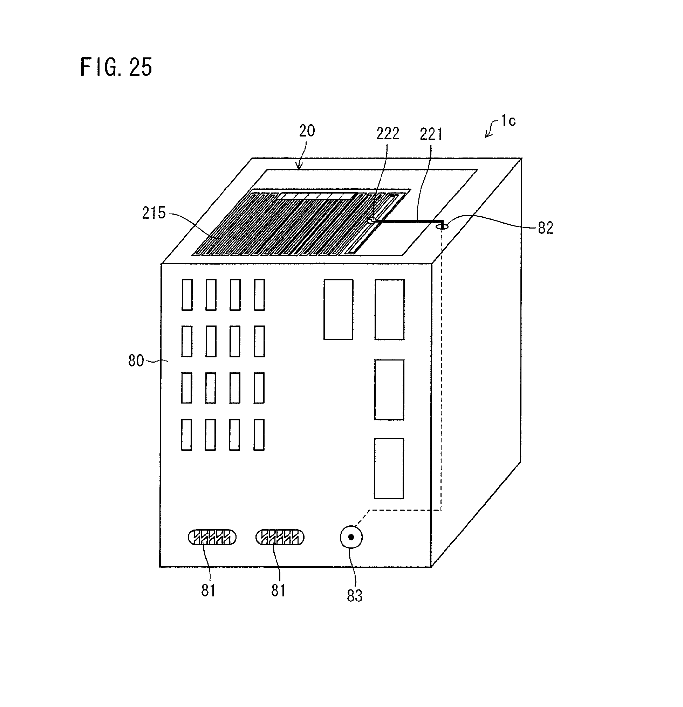

   Fig. 25 is a perspective view illustrating a configuration of an antenna integrated harness of another embodiment of the present invention.
Fig. 26

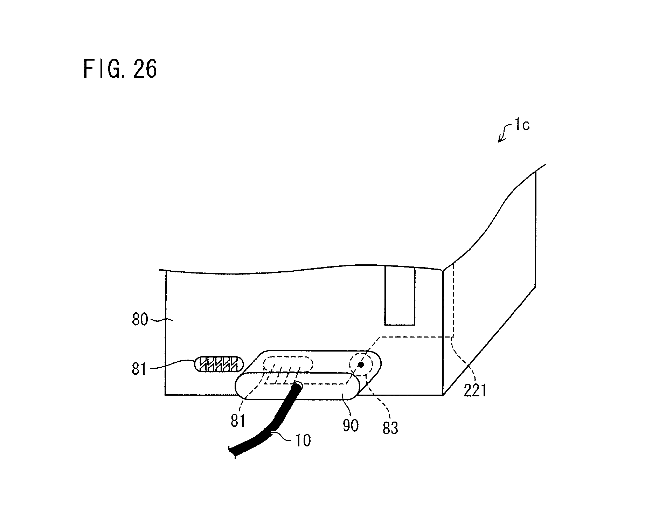

   Fig. 26 is a partially enlarged view of the antenna integrated harness shown in Fig. 25.
Fig. 27
   Fig. 27 illustrates a conventional arrangement.
Fig. 28
   Fig. 28 illustrates a conventional arrangement.

### Description of Embodiments

### [Embodiment 1]

A first embodiment of an antenna integrated harness in accordance with the present invention is described below with reference to Figs. 1 through 19.

Fig. 1 is a perspective view illustrating a configuration of an antenna integrated harness 1a of the present embodiment. The antenna integrated harness 1a in accordance with the present embodiment is arranged such that an antenna is integrated with a wire harness (described later). Therefore, the antenna integrated harness 1a can be suitably used as a wire harness which is provided in a movable body (e.g., an automobile) on which a wireless device such as a car navigation system is mounted.

The antenna integrated harness 1a of the present embodiment includes a wire harness 10 formed by bundling a plurality of electric cables 11 and an antenna 20 having an antenna element 215 (see Fig. 1).

Note that for convenience of explanation, in Fig. 1, the antenna 20 is provided in an outermost layer of the antenna integrated harness 1a. Alternatively, an exterior member may be provided so as to cover the wire harness 10 and the antenna 20.

### (Wire Harness)

Fig. 2 is a cross-sectional view taken from arrows A-A' of the antenna integrated harness 1a shown in Fig. 1.

The wire harness 10 has the plurality of electric cables 11 and a tape member 16 with which the plurality of electric cables 11 are bundled, and a shield material 17 (see Fig. 2).

The plurality of electric cables 11 have respective conductor parts and respective insulating parts which cover the conductor parts so as to cause the conductor parts to be insulated from each other.

The tape member 16 is not particularly limited in other conditions such as a material and a thickness provided that the tape member 16 allows the plurality of electric cables 11 to be bundled. A material may be selected which allows the wire harness 10 to be desirably efficient as a wire harness. For example, it is preferable to select a material which is excellent in wearability, heat resistance, adhesiveness, and the like.

Further, it is preferable that the tape member 16 be made of an insulating material. This is because, even in a case where a cover of the plurality of electric cables 11 is damaged, it is possible to maintain a state in which the respective conductor parts of the plurality of electric cables 11 and the antenna 20 are insulated from each other, and thus the plurality of electric cables 11 whose cover has been damaged does not adversely affect an antenna performance.

Note that the present embodiment uses a tape member as means for bundling the plurality of electric cables 11. However, the present invention is not limited to this, and it is possible to use a conventionally well-known material for bundling electric cables.

An outer surface of the wire harness 10 formed by bundling the plurality of electric cables 11 with the tape member 16 is covered with the shield material 17.

The shield material 17 serves as a shield that protects a group of the plurality of electric cables 11 thus bundled, and is made of an electrically conductive material. The shield material 17 allows blocking of a noise from the group of the plurality of electric cables 11, so that an influence of the noise on the antenna 20 which is provided on the exterior side of the shield material 17 can be suppressed. Note that the shield material 17 does not need to cover all the outer surface of the wire harness 10 and may merely cover (i) a region in which the antenna 20 is provided and (ii) a surrounding area of the region.

Note that neither the tape material 16 nor the shield material 17 needs to have a width which is equal to a total length of the wire harness 10 and tapes each having a shorter width than the total length of the wire harness 10 may be attached by winding to the wire harness 10 while partially overlapping with each other.

The wire harness 10 shown in Fig. 1 has a tip at which the plurality of electric cables 11 are exposed. However, the present invention is not limited to this, and the tip may be connected with a component such as a connector or another electronic device.

The present embodiment discusses an arrangement in which the antenna 20 is provided to one (1) wire harness 10. However, the present invention is not limited to this, and the antenna 20 may be provided on a surface formed by bundling wire harnesses.

### (Antenna)

The antenna 20 is provided on, while conforming to, a surface of the wire harness 10 (see Fig. 1), specifically a surface of the shield material 17 (see Fig. 2) so as to partially cover that surface.

The surface (also referred to as a side surface) of the wire harness 10 used in the present embodiment, i.e., the surface of the shield material 17 is a curved surface. Therefore, the antenna 20 which covers a part of that surface is also curved as shown in Fig. 1. Thus, the antenna 20 is arranged to be wound on the surface of the shield material 17.

The antenna 20 has a dielectric section 40 and the antenna element 215 (see Fig. 2). The dielectric section 40 is provided between the shield material 17 and the antenna element 215.

The dielectric section 40, which is made of a dielectric material, is provided so as to cause the shield material 17 and the antenna element 215 to be insulated from each other. The dielectric section 40 causes the shield material 17 and the antenna element 215 to be spaced at a predetermined distance. Specifically, it is only necessary that the shield material 17 serving as an electrically conductive material and the antenna element 215 be spaced at a distance of at least 2 mm (described later).

The dielectric section 40 is not particularly limited in structure provided that the dielectric section 40 serves as a spacer for retaining the predetermined distance at which the shield material 17 and the antenna element 215 are spaced. For example, the dielectric section 40 may be a two-dimensional dielectric layer which covers an entire surface of the antenna element 215, or may cover a part of the antenna element 215. Alternatively, the dielectric section 40 may be provided with a through hole or a recess, or may be constituted by a plurality of protrusions which are provided at regular intervals and are identical in height.

It is only necessary that the antenna 20 wound on the top surface of the shield material 17 of the wire harness 10 be arranged such that the winding of the antenna 20 does not cause both end parts of the antenna element 215 to overlap with each other. For example, in a case where the wire harness has a perimeter (circumference) of 120 mm, it is only necessary that the antenna element 215 of the antenna 20 wound on the wire harness 10 have a length, along the perimeter of the wire harness 10, of less than 120 mm.

Further, the antenna element 215 thus curved preferably has a curvature radius R of 5 mm or more. The antenna element 215 which is provided on, while conforming to, a curved surface having a curvature radius R of 5 mm or more can maintain its excellent antenna characteristic.

It is not particularly limited how to provide the antenna 20 to the wire harness 10 (shield material 17). For example, the antenna 20 may be adhered to the wire harness 10 by use of an adhesive, or may be fixed to the wire harness 10 by use of a fixing claw.

Note that, in a case where an insulating material having a thickness of at least 2 mm is further provided on the exterior of the shield material 17 of the wire harness 10, the antenna 20 may be arranged to have no dielectric section 40 but have the antenna element 215 provided on a surface of the insulating material.

The antenna element 215 of the antenna 20 is specifically described below with reference to Figs. 3 through 16.

Fig. 3 is a plan view illustrating a structure of the antenna element 215 of the antenna 20.

The antenna element 215, which is provided on, for example, a base material such as a thin resin, can be made of a conductor wire or a conductor film, or a printed wire.

The antenna element 215 has an electrically conductive path continuing from its one end part to the other end part, and the antenna element 215 is a single line. In view of the fact that the antenna element 215 has the electrically conductive path thus continuing from its one end part to the other end part, it can be said that the antenna element 215 is provided in a loop manner. With the antenna element 215 provided in a loop manner, it is possible to improve a gain of the antenna.

According to the antenna element 215, a part of the antenna element 215 which part extends from one end part by a predetermined length (i.e., a part corresponding to a wind section 211 which will be described later) and a part of the antenna element 215 which part extends from the other end part by a predetermined length (i.e., a part corresponding to the wind section 211) serve as a first root section 225 and a second root section 226, respectively. In the antenna element 215, a part of the antenna element 215 which part is other than these two root sections 225 and 226 serves as an intermediate section. That is, the intermediate section is a junction between the first root section 225 and the second root section 226.

A part of the intermediate section constitutes an antenna section 212 having a meander shape (meander line shape, meander-shaped part), and some part of the remainder of the intermediate section constitutes a first wider width part 213 and a second wider width part 214.

Meanwhile, the aforementioned two root sections 225 and 226 constitute the wind section 211. The first wider width part 213 and the second wider width part 214 share a common area with each other.

In summary, the electrically conductive path runs from its one end part of the antenna element 215 to the other end part in such a manner that the electrically conductive path begins with the first root section 225 and follows with the first wider width part 213, the second wider width part 214, the antenna section 212, and the second root section 226 in this order, and the second root section 226 comes back to a position near the first root section 225.

According to the first root section 225, the electrically conductive path continuing from its one end part to the other end part is drawn out in a leftward direction (i.e., a negative direction of the X axis) of the sheet on which Fig. 3 is shown. According to the second root section 226, the electrically conductive path continuing from the other end part to the one end part is drawn out in a rightward direction (i.e., a positive direction of the X axis) of the sheet on which Fig. 3 is shown. That is, these two directions in which the electrically conductive path is drawn out are opposite to each other.

More specifically, both of the directions in which the respective first and second root sections 225 and 226 extend are opposite to each other (are rotated by 180 degrees) so as to surround a feed section 222.

As such, in either of the following cases: transmission or reception of a radio wave on a low frequency band side or transmission or reception of a radio wave on a high frequency band side, it is possible to obtain high radiant gains with respect to the respective radio waves.

Further, the direction in which the first root section 225 is drawn out is a direction in which the feed line 221 extends from the feed section 222, which will be described later, to a power-source side, i.e., the leftward direction (i.e., the negative direction of the X axis) of the sheet on which Fig. 3 is shown, whereas the direction in which the second root section 226 is drawn out is a direction opposite to the direction in which the feed line 221 extends. Specifically, according to the wind section 211, a direction in which the first root section 225 extends from the one end of the antenna element 215 is changed from an upward direction (i.e., a positive direction of the Z axis) of the sheet on which Fig. 3 is shown to a leftward direction (i.e., the negative direction of the X axis, the drawing direction) of the sheet. That is, the first root section 225 has a first linear part 225o1, which extends in the upward direction of the sheet, and a first bending part 225o2 (first tail end linear part), which extends in the leftward direction of the sheet from an end of the first linear part 225o1.

Further, a direction in which the second root section 226 extends from the other end of the antenna element 215 is changed from a downward direction (i.e., a negative direction of the Z axis) of the sheet on which Fig. 3 is shown to a rightward direction (i.e., a positive direction of the X axis, the drawing direction) of the sheet. That is, the second root section 226 has a second linear part 226o1, which extends in the downward direction of the sheet, and a second bending part 226o2 (second tail end linear part), which extends in the rightward direction of the sheet from an end of the second linear part 226o1.

As such, according to the wind section 211, both of the directions in which the respective first and second root sections 225 and 226 extend are rotated by 90 degrees so as to surround the feed section 222.

The part of the intermediate section of the antenna element 215 has a meander shape made up of at least one return pattern, more preferably two or more return patterns, in the antenna section 212. A return direction (i.e., the Z axis direction) of the return pattern in the meander shape is perpendicular to the direction (i.e., the positive direction of the X axis) in which the second root section 226 of the antenna element 215 is drawn out in the wind section 211, i.e. the direction in which the second bending part 226o2 (tail end linear part) extends.

According to the wind section 211, for the root sections 225 and 226, the aforementioned feed section 222 is provided. The root sections 225 and 226 are fed power by the feed line 221 which is connected to the feed section 222. Specifically, an outer electric conductor of a coaxial cable serving as the feed line 221 feeds power to the first root section 225, whereas an inner electric conductor of the coaxial cable feeds power to the second root section 226. There is provided, above the first wider width part 213b, a sheathed part of the coaxial cable. The sheathed part (i) is sheathed in an insulating jacket (i.e., a part where the outer electric conductor is not exposed) and (ii) is adjacent to an exposed part where the outer electric conductor is exposed.

The power is fed in the feed section 222 via the feed line 221 as follows. Specifically, in the feed section 222, (i) a signal, having a frequency which falls within a predetermined frequency band, is applied to the second root section 226 via the inner electric conductor of the coaxial cable, and (ii) an earth electric potential is applied to the first root section 225 via the outer electric conductor of the coaxial cable.

Further, the first wider width part 213, which lies below the feed line 221 and overlaps the feed line 221, has a line width (the length in the X axis direction) wider than a line width of a part that constitutes the wind section 211 and the antenna section 212 of the antenna element 215. This allows the feed section 222 to realize an impedance matching between the antenna element 215 and the feed line 221.

As is the case with the first wider width part 213, a line width of the second wider width part 214 is wider than the line width of the part that constitutes the wind section 211 and the antenna section 212 of the antenna element 215.

Unlike the case of Fig. 3, in a case where the feed line 221 extends in the negative direction of the Z axis from the feed section 222, the second wider width part 214 plays a role of the first wider width part 213. That is, it can be said that the line width (the length in the X axis direction) of the second wider width part 214, which lies below the feed line 221 and overlaps the feed line 221, is wider than the line width of the part that constitutes the wind section 211 and the antenna section 212 of the antenna element 215.

The feed line 221, which is connected to the feed section 222 of the antenna element 215, is provided, together with the plurality of electric cables 11, in the wire harness 10 while being bundled together with the plurality of electric cables 11 of the wire harness 10 in a vicinity of the feed section 222 (see Fig. 1). According to Fig. 1, an aperture 18 is provided on the tape member 16 and the shield material 17 at a position in the vicinity of the feed section 222, and the feed line 221 is drawn into the wire harness 10 via the aperture 18, so that the feed line 221 is bundled together with the plurality of electric cables 11. Note that it is not limited to this how to draw the feed line 221 into the wire harness 10. Further, according to Fig. 1, the feed line 221 extends in the wire harness 10 in a direction in which the feed line 221 is away from the antenna element 215. Alternatively, the feed line 221 may extend in an opposite direction.

The antenna 20 (antenna element 215) has, for example, the following size: a length in a crosswise direction (i.e., X axis direction) of the sheet on which Fig. 3 is shown is 125 mm; and a length in a lengthwise direction (i.e., Z axis direction) of the sheet is 25 mm. Further, the antenna element 215 has a thickness of, for example, 1 mm. The antenna 20 is provided to the wire harness 10 so that the length in the lengthwise direction (i.e., Z axis direction) is along a circumferential direction of the wire harness 10.

Further, in the meander shape of the antenna section 212, there is provided a short-circuit member 231. The short-circuit member 231 may not only be provided as an independent member but also be formed integrally with the antenna element by use of a single material of which for example, the antenna element forming an electrically conductive path is made. The following description discusses the role of the short-circuit member 231 with reference to Fig. 4.

### • Role of the Short-circuit member 231

Fig. 4 is a view schematically illustrating a state in which a short-circuit member 331 is provided in an antenna element 315 having a meander shape, thereby a plurality of electrically conductive paths are formed in the antenna element 315.

As illustrated in Fig. 4, an antenna 301 includes the antenna element 315 which is a single path. The antenna element 315 has a meander shape. That is, the antenna element 315 is meandered. A feed section 322 of the antenna element 315 is connected with a feed line.

The short-circuit member 331 short-circuits for example two or more different points (a plurality of points) in the meandered antenna element 315. According to an example shown in Fig. 4, a short circuit is caused between two linear parts extending in respective upward and downward directions, which two linear parts are located in both end parts of the short-circuit member 331. This causes a first path (first electrically conductive path) and a second path (second electrically conductive path) to be formed. The first path corresponds to a first wavelength λ1 and is plotted in solid line, and the second path corresponds to a second wavelength λ2 and is plotted in dotted line.

Note that, although Fig. 4 illustrates the arrangement in which a plurality of points adjacent to each other in a single plane are short-circuited, a plurality of points which are not adjacent to each other may be short-circuited. For example, points may be short-circuited by a short-circuit member which is not of a linear shape. Alternatively, two or more points being away from one another may be short-circuited by an interlayer conduction achieved by a double-layered structure such that a short-circuit member is provided on a plane which is different from the plane where the antenna is provided.

As described above, according to the antenna 301, the short-circuit member 331 is provided to the meandered antenna element 315 so as to short-circuit a plurality of different points, to thereby increase the number of electrically conductive paths having different lengths. This makes it possible to increase the number of resonance frequencies (resonance points) of the antenna 301, and thus possible to improve the VSWR characteristics of the antenna 301 in a usable band.

It should be noted here that, when an antenna is mounted on a conductor member, the antenna may deteriorate in VSWR characteristics (increase in VSWR value) in a usable band due to an effect of the conductor member. The usable band is for example 470 MHz to 770 MHz in a case of an antenna for terrestrial digital broadcasting in Japan, 470 MHz to 860 MHz in a case of an antenna for terrestrial digital broadcasting in North America, and 470 MHz to 890 MHz in a case of an antenna for terrestrial digital broadcasting in Europe.

In such a case, as described with reference to the antenna 301 shown in Fig. 4, it is possible to suppress a deterioration in VSWR characteristics (increase in VSWR value) in the usable band by providing the short-circuit member 331 to the meandered antenna element 315 so as to short-circuit a plurality of different points. That is, in view of the effect of the conductor member, where in the antenna element 315 the short-circuit member 331 is to be provided so as to cause a short circuit is determined under a condition where there is a dummy conductor member near the antenna element 315. This increases the number of electrically conductive paths having different lengths, and thus increases the number of resonance frequencies of the antenna 301. As a result, it is possible to suppress a deterioration in VSWR characteristics (increase in VSWR value) in the usable band which deterioration is caused by an effect of a conductor member, even when the antenna 301 is mounted on the conductor member.

According to the antenna 20 shown in Fig. 3, the short-circuit member 231 which serves as the foregoing short-circuit member 331 is provided in the meandered antenna section 212. A position and a portion in which the short-circuit member 231 is to be provided are determined for example in the following manner.

Where to provide the short-circuit member 231 is determined so that, under a condition where the antenna element 215 is provided on a metal plate via a dielectric material, a VSWR value in each frequency in the usable band becomes less than a VSWR value obtained in a case where no short-circuit member 231 is provided. It is more preferable that where to provide the short-circuit member 231 be determined so that, under a condition where the antenna element 215 is provided on a metal plate via a dielectric material, the VSWR value in each frequency in the usable band becomes not more than 3.5.

More specifically, the short-circuit member 231 is temporarily placed on the antenna element 215 which is provided via a dielectric material on a dummy metal plate, and then the short-circuit member 231 is moved while the VSWR value in the usable band is being monitored. If a position is found in which the VSWR value in each frequency in the usable band is less than the VSWR value obtained in the case where no short-circuit member is provided, then the short-circuit member 231 is fixed to that position. On the other hand, if no position is found in which the VSWR value in each frequency in the usable band is less than the VSWR value obtained in the case where no short-circuit member is provided, then the short-circuit member 231 is replaced with another short-circuit member 231 having a different shape or a different size and then the above trial is repeated.

The short-circuit member 231 is the one that causes a short circuit between predetermined points in the antenna element 215, and can be made for example from a conductive material such as metal. The short-circuit member 231 for example makes direct contact with the antenna element 215 to thereby cause a short circuit in the antenna element 215.

The following description discusses the results of experiments for examining how the presence of the short-circuit member 231 is related to VSWR characteristics.

### • Effect of presence of short-circuit member

In this experiment, an antenna device 401 (antenna element) was mounted via a dielectric layer 402 on a metal plate 403 which is 350 mm × 250 mm in size and which serves as a conductor member (see Fig. 5). The dielectric layer 402 will be described later.

The antenna 20 shown in Fig. 3 and an antenna 501 shown in Fig. 6 were each used as the antenna device 401. The VSWR characteristic of each of these antenna devices was measured. Note that the antenna 501 shown in Fig. 6 has the same configuration as that of the antenna 20 shown in Fig. 3 except that the short-circuit member 231 provided in the antenna 20 shown in Fig. 3 is not provided in the antenna 501.

Fig. 7 is a graph illustrating the results of measurement of the VSWR characteristics of the antenna 20 and of the antenna 501. In Fig. 7, a graph indicated by "WITH SHORT-CIRCUIT MEMBER" represents the result of measurement of the antenna 20, and a graph indicated by "WITHOUT SHORT-CIRCUIT MEMBER" represents the result of measurement of the antenna 501. It should be noted that, during the measurement, a thickness d of the dielectric layer 402 was 5 mm and a specific inductive capacity εᵣ of the dielectric layer 402 was 1.

As is clear from the experimental results shown in Fig. 7, it is possible to prevent the VSWR from being greater than 3.5 in a band of not more than 800 MHz, i.e., in the terrestrial digital television band (470 MHz to 770 MHz), by providing the short-circuit member 231 to the antenna 20 so as to cause a short-circuit.

In contrast, it is clear that the antenna 501 to which no short-circuit member is provided can prevent the VSWR from being greater than 3.5 in a frequency band of 650 MHz to 750 MHz.

Meanwhile, the antenna 501 can prevent the VSWR from being greater than 3.5 in a frequency band of approximately 650 MHz to 750 MHz, thus enabling excellent transmission and reception in such a frequency band. This can be considered as the effect achieved by the arrangement of the antenna 501 in which the antenna element 215 having a meander-shaped electrically conductive path is provided.

In the case of the antenna 501, excellent VSWR characteristics were achieved in the frequency band of approximately 650 MHz to 750 MHz. This result is merely an example. That is, by design changes to the meander shape, frequency band values and ranges that satisfy the VSWR of not greater than 3.5 can be changed in various ways. Therefore, depending upon a usable frequency band, the short-circuit member may be eliminated.

### • Effect of thickness of dielectric material

The inventors have found that, by providing the dielectric layer 402 between the antenna device 401 and the metal plate 403 serving as a conductor member, it is possible to achieve an antenna device having a practical VSWR characteristic even when a distance between the antenna device 401 and the conductor member (metal plate 403) is reduced to approximately several millimeters (see Fig. 5). In this case, it is preferable to set the specific inductive capacity εᵣ of the dielectric layer 402 to be not less than 1 but not greater than 10. This is because the specific inductive capacity εᵣ of greater than 10 makes a radiant efficiency reduction unignorable.

Fig. 8 illustrates the results, for each thickness d of the dielectric layer 402, obtained by measuring the VSWR characteristic of the antenna device 401 while changing the thickness d. Note here that the antenna device 401 used here is the antenna 20 shown in Fig. 3.

Further, the thickness d was changed to the following four thicknesses: d = Infinite (∞), d = 5 mm, d = 2 mm, and d = 0 mm. Note that d = Infinite means that the distance between the antenna 20 and the metal plate 403 is infinite, i.e., no metal plate 403 is present. Further, d = 0 mm means that the antenna 20 is mounted so as to be in contact with the metal plate 403 via an insulating member that is as thin as possible, such as an insulating film. That is, d = 0 mm means that the antenna 20 and the metal plate 403 are close to each other as much as possible while a conductor part of the antenna 20 and the metal plate 403 are not in direct contact with each other.

It is clear from Fig. 8 that, when d = Infinite or d = 5 mm, it is possible to prevent the VSWR from being greater than 3.5 in a band of 470 MHz to 770 MHz. Further, even when d = 2 mm, it is possible to prevent the VSWR from being greater than 3.5 in the band of 470 MHz to 770 MHz except for a band in the vicinity of 670 MHz. This implies the following.

When d = Infinite, that is, when the antenna 20 is not mounted on the metal plate 403, the antenna 20 is not affected by the metal plate 403. In other words, when the distance between the antenna 20 and the metal plate 403 is gradually reduced from infinite, the antenna 20 should become affected by the metal plate 403 more strongly as it approaches the metal plate 403.

That is, the results in Fig. 8 show that, by causing the thickness d of the dielectric layer 402 between the antenna 20 and the metal plate 403 to be equal to or greater than 5 mm, i.e., by causing the distance between the antenna 20 and the metal plate 403 to be equal to or greater than 5 mm, it is possible to prevent the VSWR from being greater than 3.5 in the band of 470 MHz to 770 MHz. Further, the results show that, by causing the distance between the antenna 20 and the metal plate 403 to be equal to or greater than 2 mm, it is possible to prevent the VSWR from being greater than 3.5 in the band of 470 MHz to 770 MHz, except for some band(s).

Note that Fig. 8 shows a characteristic obtained in a case where an antenna base material having a specific inductive capacity εᵣ of approximately 2 to 3 and a thickness of 1 mm or less is used, and a separation distance, excluding a thickness of the base material, between the antenna 201 (the base material) and the metal plate 403, i.e. a thickness d of the dielectric layer 402 is provided by use of a material (styrene foam etc.) having a specific inductive capacity εᵣ of approximately 1.

Therefore, according to the characteristic shown in Fig. 8, the VSWR deteriorates in the vicinity of 670 MHz when the thickness d = 2 mm. However, according to the present invention, the VSWR in the vicinity of 670 MHz does not necessarily deteriorate. This is because the characteristic shown in Fig. 8 can be adjusted by optimizing, for example, a short-circuit member and/or a meander shape, the specific inductive capacity εᵣ and the thickness of the antenna base material, and/or the specific inductive capacity εᵣ of the dielectric layer 402.

Fig. 9 shows graphs each illustrating radiation patterns in a 550 MHz band of the antenna 20 shown in Fig. 3. (a) of Fig. 9 illustrates an in-xy-plane radiation pattern. (b) of Fig. 9 illustrates an in-yz-plane radiation pattern. (c) of Fig. 9 illustrates an in-zx-plane radiation pattern. Note here that the thickness d of the dielectric layer 402 was 5 mm and the specific inductive capacity εᵣ of the dielectric layer 402 was 1. Note also that in Fig. 9, Eθ indicates radiation power of the antenna with respect to a vertical polarized wave V, Eφ indicates radiation power of the antenna with respect to a horizontal polarized wave H, and Etotal indicates total radiation power of the antenna.

It is clear from Fig. 9 that a non-directivity radiation characteristic is achieved in all the in-xy-plane radiation pattern, the in-yz-plane radiation pattern, and the in-zx-plane radiation pattern.

### <Modified example [1] of antenna>

Fig. 10 illustrates an antenna 20a, which is a modified example of the antenna 20. The following description discusses in detail differences between the modified example and the antenna 20. Descriptions for the same parts are omitted here.

The antenna 20a has the following size: a length in a crosswise direction of a sheet on which Fig. 10 is illustrated (i.e., X axis direction) is 83 mm; and a length in a lengthwise direction of the sheet (i.e., Z axis direction) is 56 mm.

In a wind section 211a, a feed section 222a is provided in two root sections 225a and 226a of an antenna element 215a. Each of the two root sections 225a and 226a receives power via a feed line 221a connected with the feed section 222a.

The first root section 225a has a first linear part 225a1 and a first bending part 225a2 (tail end linear part), which correspond to the first linear part 225o1 and the first bending part 225o2 of the first root section 225 shown in Fig. 3, respectively. Similarly, the second root section 226a has a second linear part 226a1 and a second bending part 226a2 (tail end linear part), which correspond to the second linear part 226o1 and the second bending part 226o2 of the second root section 226 shown in Fig. 3, respectively.

The feed line 221a extends in the negative direction of the Z axis in the sheet on which Fig. 10 is illustrated, which direction is different from the direction in which the feed line 221 of Embodiment 1 extends.

Accordingly, a direction in which each of the two root sections 225a and 226a of the antenna element 215a is drawn out is perpendicular to the direction in which the feed line 221 extends.

Further, a line width (the length in the X axis direction) of a portion of a first wider width part 213a, which portion lies below the feed line 221a and overlaps the feed line 221a, is wider than a line width of a part that constitutes the wind section 211a and the antenna section 212a of the antenna element 215a.

The feed line 221a may extend in the negative direction of the X axis from the feed section 222a, which direction is different from that shown in Fig. 10.

As in the case of the second wider width part 214 (described earlier), a line width of a second wider width part 214a is wider than a line width of the part that constitutes the wind section 211a and the antenna section 212a of the antenna element 215a.

Further, a short-circuit member 231a and a short-circuit member 232a are provided in a meander shape of the antenna section 212a. The roles of the short-circuit members 231a and 232a are the same as those of the short-circuit member 231.

Next, the following description discusses a difference in VSWR characteristic, which difference occurs depending on the presence or absence of the short-circuit members 231a and 232a.

### • Effect of presence of short-circuit member of modified example [1]

In the same manner as the foregoing experiment, the inventors mounted an antenna device 401 (antenna element) via a dielectric layer 402 on a metal plate 403 which is 350 mm × 250 mm in size (see Fig. 5).

The antenna 20a shown in Fig. 10, an antenna 502 shown in Fig. 11 and an antenna 503 shown in Fig. 12 were each used as the antenna device 401. The VSWR characteristic of each of these antennas was measured. The antenna 502 shown in Fig. 11 has the same configuration as that of the antenna 20a shown in Fig. 10, except that the short-circuit member 232a shown in Fig. 10 is not provided in the meander-shaped part of the antenna section 212a. Further, the antenna 503 shown in Fig. 12 has the same configuration as that of the antenna 20a shown in Fig. 10, except that neither the short-circuit member 231a nor the short-circuit member 232a shown in Fig. 10 is provided in the meander-shaped part of the antenna section 212a.

Fig. 13 illustrates results obtained by measuring the VSWR characteristics of the antenna 20a, the antenna 502 and the antenna 503. In Fig. 13, a graph indicated by the "WITH SHORT-CIRCUIT MEMBERS" represents the result for the antenna 20a, a graph indicated by the "WITHOUT SHORT-CIRCUIT MEMBERS" represents the result for the antenna 503, and a graph indicated by the "WITHOUT SECOND SHORT-CIRCUIT MEMBER" represents the result for the antenna 502. It should be noted that, during the measurement, the thickness d of the dielectric layer 402 was 5 mm and the specific inductive capacity εᵣ of the dielectric layer 402 was 1.

As is clear from the graph indicated by the "WITHOUT SECOND SHORT-CIRCUIT MEMBER" in Fig. 13, first, it is possible to prevent the VSWR from being greater than 3.5 in a low-frequency band, out of the terrestrial digital television band (470 MHz to 770 MHz), by providing the short-circuit member 231a to thereby cause a short circuit.

Further, it is clear from the graph indicated by the "WITH SHORT-CIRCUIT MEMBERS" that it is possible to prevent the VSWR from being greater than 3.5 also in a high-frequency band, out of the terrestrial digital television band (470 MHz to 770 MHz), by further providing the short-circuit member 232a to thereby cause a short circuit.

Note, however, that, as is clear from the graph indicated by "WITHOUT SHORT-CIRCUIT MEMBERS", the antenna 503 prevents the VSWR from being greater than 3.5 in the frequency band of approximately 550 MHz to 620 MHz and the frequency band of approximately 680 MHz to 770 MHz (described earlier), thus enabling excellent transmission and reception in such frequency bands. This can be considered as the effect achieved by the arrangement of the antenna 503 in which the antenna element 215a having a meander-shaped electrically conductive path is provided. Therefore, depending upon a usable frequency band, the number of short-circuit members can be changed to any number including 0 (zero).

### • Effect of thickness of dielectric material of modified example [1]

Fig. 14 illustrates the results, for each thickness d of the dielectric layer 402, obtained by measuring the VSWR characteristic of the antenna device 401 while changing the thickness d. Note here that the antenna device 401 used here is the antenna 20a shown in Fig. 10.

Further, the thickness d was changed to the following four thicknesses: d = Infinite (∞), d = 5 mm, d = 2 mm, and d = 0 mm.

It is clear from Fig. 14 that, when d = Infinite or d = 5 mm, it is possible to prevent the VSWR from being greater than 3.1 in a band of 420 MHz to 920 MHz.

Further, it is clear from Fig. 14 that, when d = Infinite, d = 5 mm, or d = 2 mm, it is possible to prevent the VSWR from being greater than 3.5 in a band of 420 MHz to 870 MHz.

These results show that, by causing the distance between the antenna 20a and the metal plate 403 to be equal to or larger than 2 mm, it is possible to prevent the VSWR from being greater than 3.5 in the band of 420 MHz to 870 MHz.

Note here that Fig. 14 shows a characteristic obtained in a case where an antenna base material having a specific inductive capacity εᵣ of approximately 2 to 3 and a thickness of 1 mm or less is used, and a separation distance, excluding a thickness of the base material, between the antenna 201 (the base material) and the metal plate 403, i.e. a thickness d of the dielectric layer is provided by use of a material (styrene foam etc.) having a specific inductive capacity εᵣ of approximately 1.

Note that, also when d = 0 mm, the VSWR is prevented from being greater than 3.5 in, for example, a frequency band in the vicinity of 450 MHz, a frequency band of approximately 520 MHz to 690 MHz, and a frequency band of approximately 750 MHz to 830 MHz, thus enabling excellent transmission and reception in such frequency bands. Therefore, in a case where a usable frequency band may be limited to a specific frequency, the antenna 20a of the present invention in which the antenna element 215 having a meander shape is provided can be placed as close as to a conductor while being insulated from a surface of the conductor.

Fig. 15 shows graphs each illustrating radiation patterns in a 550 MHz band of the antenna 20a shown in Fig. 10. (a) of Fig. 15 illustrates an in-xy-plane radiation pattern. (b) of Fig. 15 illustrates an in-yz-plane radiation pattern. (c) of Fig. 15 illustrates an in-zx-plane radiation pattern. Note here that the thickness d of the dielectric layer 402 was 5 mm and the specific inductive capacity εᵣ of the dielectric layer 402 was 1.

It is clear from Fig. 15 that a non-directivity radiation characteristic is achieved in all the in-xy-plane radiation pattern, the in-yz-plane radiation pattern, and the in-zx-plane radiation pattern.

### <Modified example [2] of antenna>

The following description discusses a further modified example of the antenna mounted on the antenna integrated harness of the present embodiment. Fig. 16 is a plan view of an antenna 20b.

The antenna 20b of Fig. 16 differs from the antenna 20 shown in Fig. 3 in that the antenna 20b of Fig. 16 includes a short-circuit member 231' which is provided in the meandered antenna section 212 so as to be away from the feed section 222. The antenna 20b is identical to the antenna 20 of Fig. 3 in the other points.

As in the case of the antenna 20a of the modified example [1] shown in Fig. 10, according to the antenna 20b of the present modified example, when a distance between the antenna 20b and the metal plate 403 is equal to or greater than 2 mm, it is possible to prevent the VSWR from being greater than 3.5 in a band of 420 MHz to 870 MHz, and a non-directivity radiation characteristic is achieved in all the in-xy-plane radiation pattern, the in-yz-plane radiation pattern, and the in-zx-plane radiation pattern.

### (Exterior member)

As described at the beginning of the present embodiment, the antenna 20 is provided in the outermost layer (see Fig. 1). Alternatively, an exterior member may be provided so as to cover the wire harness 10 and the antenna 20. The following description discusses this point.

Fig. 17, which is similar to Fig. 2, is a cross-sectional view of an antenna integrated harness of the present embodiment. To the antenna integrated harness 1a shown in Fig. 17, an exterior member 30 is provided so as to cover the wire harness 10 and the antenna 20.

The exterior member 30 not only protects the wire harness 10 and the antenna 20 from an external shock but also prevents a conductor from adversely approaching the antenna 20. Specifically, the exterior member 30 can be made of a plastic material or the like.

In order to cover the wire harness 10 and the antenna 20, the exterior member 30 may be provided by, for example, providing a cleavage part along a longer-side direction of an exterior member made of a plastic material or the like, and cleaving the exterior member 30 at the cleavage part after the mounting of the antenna 20.

Further, the exterior member 30 covers an an entire circumference of the wire harness 10 and the antenna 20 in Fig. 17. However, the present invention is not limited to such an arrangement. The present invention may also be arranged such that the exterior member 30 covers at least the antenna 20.

### (Advantage of Embodiment 1)

As described earlier, the antenna integrated harness 1a includes the antenna 20 for use in a wireless device, the antenna 20 having the antenna element 215 which is two-dimensional planar (plate-like) and is provided on, while conforming to, the surface (may also be referred to as the side surface) of the wire harness 10, and the feed line 221 which is connected with the antenna element 215 is bundled with the plurality of electric cables 11 in the vicinity of the feed section 222. This allows an antenna element to transmit and receive radio waves on a surface of a wire harness.

This makes it possible to provide the antenna element 215 to a wire harness which is provided in a vicinity of a wireless device. According to this, a length of an antenna wire for use in connection between the antenna 20 and a wireless device can be shorter than that of a conventional antenna wire. Fig. 18 illustrates this point. An example of a wireless device 95 of Fig. 18 is a car navigation system mounted on an automobile. The wire wireless 10 formed by causing a group of electric cables including an electric cable for a voltage supply from an outside to the wireless device 95 to be a bundle is connected with the wireless device 95. The antenna integrated harness in accordance with the present invention includes the antenna 20 provided on the surface of the wire harness 10 (see Fig. 18). A feed line of the antenna 20 is bundled with the group of electric cables, so as to be connected with the wireless device 95. The antenna 20 thus provided to the wire harness 10 extending from the wireless device 95 allows a wire for use in connection between the wireless device 95 and the antenna 20 to be extremely short.

Further, given that the antenna element 215 is two-dimensional planar (plate-like) along the side surface of the wire harness 10, only a small space is necessary in which the antenna element 215 is to be provided. For example, in a case where the antenna element is a conductor having a thickness of 1 mm (described earlier), the wire harness merely becomes larger in diameter by approximately 2 mm. Even if the dielectric section 40 having a thickness of 2 mm is provided between the antenna element and the wire harness, the wire harness merely becomes larger in diameter by approximately 6 mm. This allows the antenna 20 to be provided also in a narrow space in which an antenna having a conventional arrangement cannot be provided.

Further, according to the arrangement, the feed line 221, which is bundled with the plurality of electric cables 11 in the vicinity of the feed section 222, constitutes the wire harness 10. According to this, unlike a conventional arrangement, an arrangement in which the wire harness 10 is used as, for example, a wire harness for an automobile eliminates the need to cause a feed line to be through a through hole provided to a body. Therefore, such an arrangement makes it easier to provide a feed line as compared to the conventional arrangement.

Further, in a case where antennas for terrestrial digital broadcasting are put into practical use, the antennas will be mounted on various receivers such as a mobile phone, a personal computer, a car navigation system, and an in-car television receiver each serving as a receiving terminal of the terrestrial digital broadcasting. Note that, in a case where an antenna is mounted on a conductor member made of a metal plate or the like, the antenna is inevitably affected by the conductor member. That is, unlike a case where an antenna alone is provided in a vacuum free space, in a case where an antenna is mounted on a conductor member, it is necessary to design an antenna integrated harness in view of an influence of the conductor member on the antenna. Therefore, according to the present embodiment, an antenna is mounted on a conductor member in view of an influence thereon of the conductor member. In order to realize such an arrangement, a short-circuit member (short-circuit section) is used to determine a position and a portion in which the short-circuit member is to be provided, to thereby increase the number of resonance points of an antenna element and to reduce a VSWR value. According to this, even in a case where an antenna (antenna integrated harness) is mounted on a conductor member, it is possible to expand a usable band.

Note that the present embodiment discusses an arrangement in which the antenna 20 is provided to one (1) wire harness 10. However, the present invention is not limited to this, and the antenna 20 may be provided on a surface formed by bundling wire harnesses.

### <Modified example [1] of Embodiment 1 >

According to the present embodiment, a cross section of the wire harness 10 has a circular shape (see Fig. 2). However, the cross section of the wire harness 10 does not need to have such a shape. A wire harness whose cross section has a shape different from the circular shape may be formed in accordance with how the tape member 16 is attached by winding to the wire harness 10. For example, the wire harness 10 may be a wire harness 10a in which electric cables 11 are provided in parallel with each other (see Fig. 19). Since the wire harness 10a shown in Fig. 19 may have a flat part on its surface, it is only necessary that the antenna 20 which is flat be provided in the flat part.

Further, the antenna 20 of the present embodiment may be provided with not only the antenna element 215 but also a tuner section 4 (transmitting and receiving circuit) (see Fig. 19). The tuner section 4 and the antenna element 215 can be provided side by side on a top surface (a single surface) of a base material of a dielectric material.

With such an arrangement in which the tuner section 4 and the antenna element 215 are provided side by side on a single surface, it is possible to shorten a conduction route for use in connection between the antenna element 215 and the tuner section 4. This makes it possible to reduce a loss caused by the conduction route and to form the conduction route to be thin.

It is possible to take, as an example, a case where a part of a receiving system and a transmitting system of an in-car device, and the antenna element 215 are provided side by side on a single surface. Specifically, it is assumed that the receiving system is mainly a system for receiving terrestrial digital broadcasting and that the transmitting system is mainly ITS (Intelligent Transport Systems) which is a communication system such as ETC. Note that besides these systems, a receiving/ transmitting system of an in-car device may also be a system for use in WiMax communication.

The receiving system includes an antenna, a receiving circuit, a demodulator circuit, an AV decoder, and a car navigation device.

According to the receiving system, a signal (received signal) received by the receiving circuit which is connected with the antenna 20 via the feed line 221 is transmitted to the demodulator circuit at a subsequent stage.

The demodulator circuit demodulates the signal thus received and transmits the demodulated signal to the AV decoder at a subsequent stage.

The AV decoder decodes the demodulated signal and transmits the decoded signal to the car navigation device at a subsequent stage.

The car navigation device displays an image in accordance with the signal decoded by the AV decoder.

Meanwhile, the transmitting system includes an antenna, a transmitting circuit, a modulation circuit, a control section, and a car navigation device.

According to the transmitting system, in accordance with a signal transmitted from the car navigation device, the control section supplies a control signal to the modulation circuit.

The modulation circuit modulates the control signal and transmits the modulated signal to the transmitting circuit at a subsequent stage.

The transmitting circuit transmits the control signal from the antenna via a feed line.

Note here that provision of a part of a receiving system and/or a transmitting system and the antenna element 215 side by side on a single surface means, in the case of the receiving system, employment of an embodiment in which the receiving circuit or the receiving circuit and the demodulator circuit, and the antenna element 215 are provided side by side on a single surface. Note also that provision of a part of a receiving system and/or a transmitting system and the antenna element 215 side by side on a single surface means, in the case of the transmitting system, employment of an embodiment in which the transmitting circuit or the transmitting circuit and the modulation circuit, and the antenna element 215 are provided side by side on a single surface.

In a case where a part of such a system(s) and the antenna element 215 are provided side by side on a top surface (a single surface) of a base material of a dielectric material, it is possible to yield an effect of making a wireless device smaller or thinner, or an effect such that, since a transmitting and receiving circuit can be provided so as to be adjacent to an antenna, it is unnecessary to consider an impedance of a transmission path from the antenna to the transmitting and receiving circuit.

Note that an antenna which is surrounded by a conductor cannot carry out transmission/reception and that an antenna which is not surrounded by a conductor but along which a conductor plate is provided between the antenna and an outside deteriorates in transmission/reception characteristic. Therefore, in a case where the antenna 20 is arranged to be integrated with a wireless device, it is preferable that the antenna 20 be provided on a surface of a conductor plate located on the outermost side of the wireless device, or on a surface of a dielectric plate such as a resin covering the conductor plate.

### <Modified example [2] of Embodiment 1 >

The present embodiment has discussed an arrangement in which the antenna 20 is provided on the surface of the wire harness 10 (shield material 17). Alternatively, the antenna 20 may be provided on an inner surface of the exterior member 30. Further, according to Fig. 17, the antenna 20 is arranged such that the antenna element 215 is provided so as to be closer to the exterior member 30 than the dielectric section 40 and the dielectric section 40 is provided so as to be closer to the shield material 17 than the antenna element 215. Alternatively, in a case where an outer layer of the shield material 17 is covered with an insulating material, the antenna 20 may be arranged such that the dielectric section 40 is provided so as to be closer to the exterior member 30 than the antenna element 215 and the antenna element 215 is provided so as to be closer to the shield material 17 than the dielectric section 40.

### <Modified example [3] of Embodiment 1>

The present embodiment has discussed an arrangement in which one (1) antenna 20 is attached to a surface of the tape member 16. However, the present invention is not limited to this, and a plurality of antennas 20 may be attached to the surface of the tape member 16. In this case, two of the plurality of antennas 20 can be used to carry out reception in a diversity mode. That is, since it is possible to preferentially use a received signal of an antenna 20 that carries out reception in good condition, a wireless device can carry out reception with higher sensitivity. Note that, in a case where reception is carried out in the diversity mode, it is desirable that antennas or antenna integrated harnesses be provided at some distance therebetween in view of reception sensitivity.

### [Embodiment 2]

Next, a second embodiment of an antenna integrated harness in accordance with the present invention is described below.

Fig. 20 is a perspective view illustrating a configuration of an antenna integrated harness 1b of the present embodiment. Fig. 21 is a cross-sectional view taken from arrows B-B' of the antenna integrated harness 1b shown in Fig. 20.

According to Embodiment 1, the antenna 20 is provided to the wire harness 10 (see Fig. 1). In contrast, according to the present embodiment, an antenna 20 is provided not directly to a wire harness but to a member which can be connected with a wire harness 10.

The following description of the present embodiment takes, as an example of the member, a protector 50 for regulating a path of a wire harness and protecting against an external damage to the wire harness.

The protector 50 can be made of, for example, a resin. As shown in Fig. 20, the wire harness 10 formed by bundling a plurality of electric cables 11 can be provided in the protector 50. The protector 50 shown in Fig. 20 has aperture regions 51 provided in three places (Fig. 20 illustrates only the aperture regions 51 provided in two of the three places), and the wire harness 10 can be drawn out to an outside via each of the aperture regions 51 provided in the three places.

In a case where the protector 50 shown in Fig. 20 is used, the path of the wire harness can be regulated by, for example, inserting all the plurality of electric cables 11 into the protector 50 via the aperture region provided on a left side of a sheet on which Fig. 20 is shown, dividing a group of the plurality of electric cables 11 into two groups of a plurality of electric cables 11 in the protector 50, and drawing out (i) one of the two groups from the protector 50 via the aperture region 51 provided on a front side of the sheet on which Fig. 20 is shown and (ii) the other of the two groups from the protector 50 via the aperture region 51 provided on a right side of the sheet on which Fig. 20 is shown. Note that a method for regulating the path is not limited to such a method.

According to the present embodiment, the antenna 20 is provided on a surface of the protector 50 thus arranged. Since an arrangement of an antenna element 215 of the antenna 20 has been specifically discussed in Embodiment 1, a description thereof is omitted here.

A feed line 221 connected with a feed section 222 of the antenna element 215 is drawn into the protector 50 via a through hole 52 of the protector 50, the through hole 52 being provided in a vicinity of the feed section 222. Then, the feed line 221 is drawn out from the protector 50 via one of the aperture regions 51 of the protector 50, and constitutes the wire harness 10 by being bundled with the plurality of wires 11 belonging to a corresponding one of the two groups and having been drawn out from the protector 50 via the one of the aperture regions 51.

According to Fig. 21, the feed line 221, which is drawn out from the protector 50 via the aperture region 51 provided on a left side of a sheet on which Fig. 21 is shown, is bundled with electric cables 11. Note here that it is not particularly limited how to bundle the feed line 221 and the electric cables 11. For example, it is only necessary to use the feed line 221 which extends from the feed section 222 so as to have a given length. In a case where the feed line 221 has an insufficient length, the feed line 221 can be bundled with the electric cables 11 by being electrically connected with another electric cable at its end so as to be longer.

The protector 50 may be provided with guide means for guiding the feed line 221 to each of the aperture regions 51. The guide means is, for example, a guide groove. Note that the through hole 52 also serves as an example of the guide means.

The antenna 20 can be provided on the surface of the protector 50 by the method described in Embodiment 1. Further, the antenna 20 may also be embedded in the protector 50.

Note that Embodiment 1 has described that the antenna element 215 and the plurality of electric cables 11 (conductor member) need to be separated from each other by a given distance. Also for the antenna integrated harness 1b of the present embodiment, this point needs to be considered. Therefore, in a case where a part of the protector 50 in which part the antenna 20 is provided is made of a dielectric material and a thickness of the part is set to 2 mm or more, the antenna element 215 can also be formed directly on the surface of the protector 50.

Note that a position in which the antenna 20 is provided is not limited to a position shown in Fig. 20. For example, the antenna element 215 can also be provided in a boundary part between a top surface and a side surface of the protector 50 so as to be curved along the boundary part (see Fig. 22). In a case where the antenna element 215 is thus provided by being curved, a curved part preferably has a curvature radius R of 5 mm or more. The antenna element 215 which is provided on, while conforming to, a curved surface having a curvature radius R of 5 mm or more can maintain its excellent characteristic.

### <Another example [1] of Embodiment 2>

According to the present embodiment, the antenna 20 is provided to the protector 50 (see Figs. 20 through 22). However, according to the antenna integrated harness in accordance with the present invention, an antenna can be mounted not only on a protector but also on a member which can be connected with a wire harness. For example, an antenna can be mounted on a grommet, a waterproof cap, or the like. Fig. 23 shows, as another example of the present embodiment, an antenna integrated harness 1b' in which the antenna 20 is provided to a grommet 60.

The grommet 60 (see Fig. 23), which is provided in, for example, a part of a body through which part an engine room and an inside of an automobile are connected, can retain a wire harness. Normally, a grommet is sealed by filling, with, for example, rubber, a part in which the grommet retains a wire harness. The grommet is a waterproof component which, by realizing water impermeability, can prevent water from being infiltrated from the engine room to the inside of the automobile via the part of the grommet in which part the grommet retains the wire harness. Another role of the grommet is exemplified by dust proofing, sound isolation, deodorization, and fixing and protection of a harness.

According to the present invention, it is also possible to fix the antenna 20 on a surface of the grommet 60 of Fig. 23. The antenna 20 is fixed on the surface of the grommet 60, and the feed line 221 is arranged as a part of the wire harness 10 by being drawn, via a through hole 61 of the grommet 60, into a part of the grommet 60 in which part the grommet 60 retains the wire harness 10 (see Fig. 23). In a case where, after the feed line 221 is arranged as the wire harness, the grommet is sealed by filling, with, for example, rubber, the part in which the grommet retains the wire harness (described earlier), the grommet thus arranged can realize water impermeability as in the case of a general grommet.

Note that the present invention also encompasses a member which is attached to a harness and provided with an antenna that is provided on, while conforming to, a surface of the member or is embedded in the member. Namely, the present invention also encompasses a member which is attached to a harness and can be connected with a wire harness formed by bundling a plurality of electric cables, the member including: an antenna element which is two-dimensional planar (plate-like) and is provided on, while conforming to, a surface of the member; and a feed line which is connected with the antenna element and which can be bundled with the plurality of electric cables when the member is connected with the wire harness.

### <Another example [2] of Embodiment 2>

Fig. 24 shows a connecter as another example of a member which is connected with a wire harness. As in the case of the antenna integrated harnesses mentioned above, an antenna integrated harness 1b" shown in Fig. 24 can be arranged by fixing the antenna element 215 of the antenna 20 on a surface of a connector 70.

The feed line 221 can be arranged as a part of the wire harness 10 by being drawn into the connector via a hole 71 provided to the connector 70.

Note that the feed line 221 may also be arranged as one of connection terminal groups 72 by being drawn into the connector via the hole 71, the connection terminal groups 72 being provided on a side surface of the connector.

Further, the antenna element 215 may be embedded in the connector 70.

### (Advantage of Embodiment 2)

As described earlier, each of the antenna integrated harnesses 1b, 1b', and 1b" of the present embodiment includes the antenna 20 which is used for a wireless device and is provided with the antenna element 215 that is two-dimensional planar and is fixed on the surface of the member for being connected with the wire harness 10, and the feed line 221 which is connected with the antenna element 215 is bundled with the plurality of electric cables 11 of the wire harness 10 in the vicinity of the feed section 222. This allows the antenna element to transmit and receive radio waves on the surface of the member.

Therefore, the antenna element 215 can be provided on a surface of a member which is connected with the wire harness 10 and is located in a vicinity of a wireless device. According to this, an antenna wire for use in connection between the antenna 20 and the wireless device can be remarkably shorter in length than a conventional antenna wire.

Further, given that the antenna element 215 is two-dimensional planar along the surface of the member, only a small space is necessary in which the antenna element 215 is to be provided. For example, in a case where the antenna element is a conductor having a thickness of 1 mm (described earlier), even if the dielectric section 40 having a thickness of 2 mm is provided between the antenna element and the member, the member merely becomes slightly larger. This allows the antenna 20 to be provided also in a narrow space in which an antenna having a conventional arrangement cannot be provided.

### [Embodiment 3]

Next, a third embodiment of an antenna integrated harness in accordance with the present invention is described below.

Fig. 25 is a perspective view illustrating a configuration of an antenna integrated harness 1c of the present embodiment. Fig. 26 is a partial perspective view illustrating a part of the antenna integrated harness 1c shown in Fig. 25.

According to Embodiment 1, the antenna 20 is provided to the wire harness 10 (see Fig. 1). In contrast, according to the antenna integrated harness 1c of the present embodiment (see Fig. 25), an antenna 20 is provided not to a wire harness but on a surface of a fuse box 80 which is a component that can be connected with a wire harness 10.

The fuse box 80 is a device for, for example, distributing electricity to an automobile, and is provided in, for example, an engine room. The fuse box 80 is provided with an external connection terminal 81. The external connection terminal 81 is electrically connected with an electric cable of the wire harness 10 via a connector 90 (see Fig. 26).

The antenna 20 has an antenna element 215 which is fixed on, while conforming to, a surface of the fuse box 80.

A feed line 221 connected with a feed section 222 of the antenna element 215 is drawn into the fuse box 80 via a through hole 82 of the fuse box 80, the through hole 82 being provided in a vicinity of the feed section 222.

An antenna terminal 83 connected with the feed line 221 is provided in a vicinity of the external connection terminal 81 of the fuse box 80.

For example, while providing the external connection terminal 81 and the antenna terminal 83 in proximity to each other, it is also possible to provide the connector 90 with a terminal corresponding to the antenna terminal 83. According to this, an electric cable connected with the terminal can be arranged as the wire harness 10 by being bundled with other electric cables.

Note that the antenna 20 does not need to be fixed on, while conforming to, the surface of the fuse box 80 but may be embedded in a case of the fuse box 80.

### (Advantage of Embodiment 3)

As described earlier, the antenna integrated harness 1c of the present embodiment includes the antenna 20 which is provided with the antenna element 215 that is two-dimensional planar and is fixed on the surface of the fuse box, and the fuse box 80 has, on its side surface, the external connection terminal (antenna terminal 83) which is electrically connected with the feed line 221 that is connected with the antenna element 215. This allows the antenna element 215 to transmit and receive radio waves on the surface of the fuse box.

Note that an external electric cable which is electrically connected with the antenna terminal 83 via another terminal can be arranged as the wire harness 10 by being bundled with other electric cables.

Further, given that the antenna element 215 is two-dimensional planar along the surface of the member, only a small space is necessary in which the antenna element 215 is to be provided. This allows the antenna 20 to be provided also in a narrow space in which an antenna having a conventional arrangement cannot be provided.

The present invention is not limited to the description of the embodiments above, but may be altered by a skilled person within the scope of the claims. An embodiment based on a proper combination of technical means disclosed in different embodiments is encompassed in the technical scope of the present invention.

### [Conclusion]

As described earlier, a first antenna integrated harness in accordance with the present invention includes: a wire harness formed by bundling a plurality of electric cables; an antenna element which is plate-like and is provided on, while conforming to, a surface of the wire harness; and a feed line connected with the antenna element and bundled with the plurality of electric cables.

According to the arrangement, the first antenna integrated harness in accordance with the present invention includes an antenna element which is plate-like (two-dimensional planar) and is provided on, while conforming to, a surface of a wire harness (i.e., a surface along a length direction of the wire harness). Namely, the arrangement allows the antenna element to transmit and receive radio waves on the surface of the wire harness.

Further, given that the antenna element is plate-like along the surface of the wire harness, only a small space is necessary in which the antenna element is to be provided. For example, in a case where the antenna element is a conductor having a thickness of 1 mm (described later), the wire harness merely becomes larger in diameter by approximately 2 mm. This allows an antenna of the present invention to be provided also in a narrow space in which an antenna having a conventional arrangement cannot be provided.

According to the arrangement, the feed line is bundled with the plurality of electric cables. According to this, in a case where the first antenna integrated harness in accordance with the present invention is used as, for example, a wire harness for an automobile, it is possible to provide an antenna without the need of carrying out a conventional complicated step of mounting an antenna by providing a through hole for a connection between an outside and an inside of the automobile.

Note that "an antenna element which is plate-like and is provided on, while conforming to, a surface of a wire harness" encompasses not only (1) a state in which the antenna element is provided on the surface of the wire harness but also all the following states (described later): (2) a state in which the antenna element is not in direct contact with the surface of the wire harness, i.e., a state in which the antenna element is provided on an outer surface of a dielectric material which is provided on the surface of the wire harness, (3) a state in which the antenna element is provided on an inner surface of a dielectric material provided on, while conforming to, the surface of the wire harness, and (4) a state in which the antenna element is embedded in a dielectric material provided on, while conforming to, the surface of the wire harness.

Note that a "plate-like" plane is not limited to a two-dimensional plane but may be a plane which (i) is obtained by cutting off a part of a curved surface such as a cylindrical surface, a spherical surface, a paraboloid, or a hyperboloid and (ii) has a three-dimensional shape.

As described earlier, a second antenna integrated harness in accordance with the present invention includes: a wire harness formed by bundling a plurality of electric cables; a member which can be connected with the wire harness; an antenna element which is plate-like and is provided on, while conforming to, a surface of the member; and a feed line which is connected with the antenna element and which can be bundled with the plurality of electric cables when the member is connected with the wire harness.

According to the arrangement, the second antenna integrated harness in accordance with the present invention includes an antenna element which is plate-like (two-dimensional planar) and is provided on, while conforming to, a surface of a member which can be connected with the wire harness. Namely, the arrangement allows the antenna element to transmit and receive radio waves on the surface of the member.

Further, given that the antenna element is plate-like along the surface of the member, only a small space is necessary in which the antenna element is to be provided. For example, in a case where the antenna element is a conductor having a thickness of 1 mm (described later), a size of the member is substantially unchanged. This allows an antenna of the present invention to be provided also in a narrow space in which an antenna having a conventional arrangement cannot be provided.

Further, since the antenna element is fixed to the member, it is unnecessary to carry out a conventional complicated step of mounting an antenna by providing a through hole for a connection between an outside and an inside of the automobile.

Each of the first antenna integrated harness and the second antenna integrated harness in accordance with the present invention is also preferably arranged such that: the antenna element has an electrically conductive path continuing from one end part to the other end part, and causes the electrically conductive path to be loop-shaped by having a feed section provided in the one and the other end parts of the electrically conductive path; the antenna element has a first root section which includes the one end part of the electrically conductive path, a second root section which includes the other end part of the electrically conductive path, and an intermediate section which lies between the first root section and the second root section; the feed section is provided in the first root section and the second root section; the first root section and the second root section are arranged, in a first region that is part of a region where the electrically conductive path is formed, so as to surround the feed section; in the first region, tail end linear parts of the respective first and second root sections, which tail end linear parts are directly connected with the intermediate section, extend in respective opposite directions; at least one of the first and second root sections has a wider width part which is formed such that a portion that overlaps the feed line connected with the feed section is larger in width than other portions; and the intermediate section has a meander shape made up of at least one return pattern.

According to the arrangement, the antenna element which has an electrically conductive path continuing from one end part to the other end part causes the electrically conductive path to be loop-shaped by having a feed section provided in the one and the other end parts of the electrically conductive path. According to this, as in the case of a conventionally well-known loop antenna, each of the antenna integrated harnesses thus arranged makes it possible to obtain a high radiant gain.

Further, each of the first antenna integrated harness and the second antenna integrated harness in accordance with the present invention can be arranged such that the antenna element has a first root section which includes the one end part of the electrically conductive path, a second root section which includes the other end part of the electrically conductive path, and an intermediate section which lies between the first root section and the second root section; the feed section is provided in the first root section and the second root section; and the first root section and the second root section are arranged, in a first region that is part of a region where the electrically conductive path is formed, so as to surround the feed section. In addition, each of the first antenna integrated harness and the second antenna integrated harness in accordance with the present invention can be arranged such that in the first region, tail end linear parts of the respective first and second root sections, which tail end linear parts are directly connected with the intermediate section, extend in respective opposite directions; and at least one of the first and second root sections has a wider width part which is formed such that a portion that overlaps the feed line connected with the feed section is larger in width than other portions.

This allows the feed section to realize an impedance matching between the antenna element and the feed line, to thereby reduce a VSWR value of the antenna element. Namely, it is possible to improve a VSWR characteristic.

Further, since the intermediate section has a meander shape made up of at least two return patterns, even a loop-shaped electrically conductive path can be compactly provided. In addition, in either of the following cases: transmission or reception of a radio wave on a low frequency band side or transmission or reception of a radio wave on a high frequency band side, it is possible to improve non-directivity radiation characteristics with respect to the respective radio waves.

In view of the above, the antenna element having the arrangement makes it possible to improve a non-directivity radiation characteristic and to improve its VSWR characteristic while realizing its high radiant gain. Therefore, it is possible to expand a region in which the antenna element can be used.

Each of the first antenna integrated harness and the second antenna integrated harness in accordance with the present invention is preferably arranged to further include a dielectric section which is provided on the surface side of the antenna element.

According to the arrangement, for example, in a case where an antenna integrated harness includes a wire harness and an antenna element, and further includes a dielectric section provided on a surface of the antenna element which surface faces the wire harness, it is possible to realize a state in which the antenna element and the plurality of electric cables of the wire harness are insulated or substantially insulated from each other. This makes it possible to provide the antenna element in a vicinity of the plurality of electric cables of the wire harness. Even the antenna element thus provided can exhibit an excellent antenna characteristic without losing its characteristic.

However, each of the first antenna integrated harness and the second antenna integrated harness in accordance with the present invention may be arranged such that: the surface is made of a dielectric material; and the antenna element is provided on, while conforming to, a surface of the dielectric material.

According to the arrangement, for example, in a case where an antenna integrated harness includes a wire harness and an antenna element, and a surface of the wire harness is made of a dielectric material, it is possible to realize a state in which the antenna element and the plurality of electric cables of the wire harness are insulated or substantially insulated from each other. This makes it possible to provide the antenna element in a vicinity of the plurality of electric cables of the wire harness. Even the antenna element thus provided can exhibit an excellent antenna characteristic without losing its characteristic.

The first antenna integrated harness in accordance with the present invention may be arranged to further include: an exterior member which covers the antenna element and the surface of the wire harness, the antenna element being provided on a surface of the exterior member.

According to the arrangement, since the antenna element is provided to the exterior member, a conductor of the wire harness and the antenna element can be sufficiently spaced.

Each of the first antenna integrated harness and the second antenna integrated harness in accordance with the present invention is preferably arranged such that: the surface of the wire harness or the member is a curved surface; and the antenna element has a shape along the curved surface.

According to the arrangement, the antenna element can be provided on, while conforming to, the surface of the wire harness or the member which surface has a curved shape. Therefore, the antenna element whose structure is limited to a flat and plate-like structure cannot be provided on, while conforming to, such a surface. Even if such an antenna element is provided on, while conforming to, the surface, a wide space is necessary in which the antenna element is to be provided. However, according to the arrangement, the antenna element can be provided on, while conforming to, the curved surface. This makes it possible to provide an antenna even in a narrow space.

Each of the first antenna integrated harness and the second antenna integrated harness in accordance with the present invention is preferably arranged such that: the curved surface along which the antenna element has a shape has a curvature radius of 5 mm or more.

As described earlier, in a case where the antenna element can be provided on, while conforming to, the curved surface which has a curvature radius of 5 mm or more, each of the antenna integrated harnesses can maintain its excellent antenna characteristic.

Each of the first antenna integrated harness and the second antenna integrated harness in accordance with the present invention may be arranged such that: the antenna element is provided on a base material; and at least one of a transmitting circuit and a receiving circuit is provided on the base material.

According to the arrangement, it is possible to shorten a conduction route for use in connection between the antenna element and a transmitting and receiving circuit. This makes it possible to reduce a loss caused by the conduction route and to form the conduction route to be thin.

Note that a movable body on which an antenna integrated harness mentioned above is mounted is also included within the scope of the present invention.

### Industrial Applicability

The present invention is applicable to an antenna for receiving a broadcast wave. In particular, the present invention provides an antenna that is suitably provided in a place such as an automobile in which an antenna device is provided in a limited space and many conductor parts are provided around the antenna device.

### Reference Signs List

- 1a, 1b, 1c: Antenna integrated harness (Antenna device)
- 4: Tuner section
- 10, 10a: Wire harness
- 11: Electric cable
- 16: Tape member
- 17: Shield material
- 18: Aperture
- 20, 20a, 20b, 301: Antenna
- 30: Exterior member
- 40: Dielectric section
- 50: Protector
- 51: Aperture region
- 52: Through hole
- 60: Grommet
- 61: Through hole
- 70: Connector
- 80: Fuse box
- 81: External connection terminal
- 82: Through hole
- 83: Antenna terminal
- 90: Connector
- 95: Wireless device
- 211, 211a: Wind section
- 212, 212a: Antenna section
- 213, 213a, 213b: First wider width section
- 214: Second wider width section
- 215, 215a, 315: Antenna element
- 221, 221a: Feed line
- 222, 222a, 322: Feed section
- 225, 225a: First root section
- 225a1: First linear part
- 225a2: First bending part
- 225o1: First linear part
- 225o2: First bending part
- 226, 226a: Second root section
- 226a1: Second linear part
- 226a2: Second bending part
- 226o1: Second linear part
- 226o2: Second bending part
- 231, 231', 231a, 232a, 331: Short-circuit member (Short-circuit section)
- 401: Antenna device
- 402: Dielectric layer
- 403: Metal plate

## Claims

1. An antenna integrated harness comprising:
a wire harness formed by bundling a plurality of electric cables;
an antenna element which is plate-like and is provided on, while conforming to, a surface of the wire harness; and
a feed line connected with the antenna element and bundled with the plurality of electric cables.

2. An antenna integrated harness comprising:
a wire harness formed by bundling a plurality of electric cables;
a member connected with the wire harness;
an antenna element which is plate-like and is provided on, while conforming to, a surface of the member; and
a feed line connected with the antenna element and bundled with the plurality of electric cables.

3. The antenna integrated harness as set forth in claim 1 or 2, wherein:
the antenna element has an electrically conductive path continuing from one end part to the other end part, and causes the electrically conductive path to be loop-shaped by having a feed section provided in the one and the other end parts of the electrically conductive path;
the antenna element has a first root section which includes the one end part of the electrically conductive path, a second root section which includes the other end part of the electrically conductive path, and an intermediate section which lies between the first root section and the second root section;
the feed section is provided in the first root section and the second root section;
the first root section and the second root section are arranged, in a first region that is part of a region where the electrically conductive path is formed, so as to surround the feed section;
in the first region, tail end linear parts of the respective first and second root sections, which tail end linear parts are directly connected with the intermediate section, extend in respective opposite directions;
at least one of the first and second root sections has a wider width part which is formed such that a portion that overlaps the feed line connected with the feed section is larger in width than other portions; and
the intermediate section has a meander shape made up of at least one return pattern.

4. The antenna integrated harness as set forth in any one of claims 1 through 3, further comprising a dielectric section which is provided on the surface side of the antenna element.

5. The antenna integrated harness as set forth in any one of claims 1 through 3, wherein:
the surface is made of a dielectric material; and
the antenna element is provided on, while conforming to, a surface of the dielectric material.

6. The antenna integrated harness as set forth in claim 1, further comprising:
an exterior member which covers the antenna element and the surface of the wire harness,
the antenna element being provided on a surface of the exterior member.

7. The antenna integrated harness as set forth in any one of claims 1 through 6, wherein:
the surface of the wire harness or the member is a curved surface; and
the antenna element has a shape along the curved surface.

8. The antenna integrated harness as set forth in claim 7, wherein: the curved surface along which the antenna element has a shape has a curvature radius of 5 mm or more.

9. The antenna integrated harness as set forth in any one of claims 1 through 8, wherein:
the antenna element is provided on a base material; and
at least one of a transmitting circuit and a receiving circuit is provided on the base material.

10. A movable body on which an antenna integrated harness recited in any one of claims 1 through 9 is mounted.
